# EUROPÄISCHE PATENTSCHRIFT

(11) **EP 2 807 071 B1**
(45) Veröffentlichungstag und Bekanntmachung des Hinweises auf die Patenterteilung: **20.06.2018**
(21) Anmeldenummer: 12816453.0
(22) Anmeldetag: 05.12.2012
(51) Int. Cl.: B62D 1/19

(54) **LENKSÄULE FÜR EIN KRAFTFAHRZEUG**
STEERING COLUMN FOR A MOTOR VEHICLE
COLONNE DE DIRECTION D'UN VÉHICULE AUTOMOBILE

(30) Priorität: 25.01.2012 DE 102012100626
(43) Veröffentlichungstag der Anmeldung: 03.12.2014
(73) Patentinhaber: ThyssenKrupp Presta Aktiengesellschaft, 9492 Eschen (LI); thyssenkrupp AG, 45143 Essen (DE)
(72) Erfinder: HUBER, Seby, A-6811 Göfis (AT)
(74) Vertreter: thyssenkrupp Intellectual Property GmbH
(86) Internationale Anmeldenummer: PCT/EP2012/005007
(87) Internationale Veröffentlichungsnummer: WO 2013/110305

(56) Entgegenhaltungen:
- WO-A2-2010/009486
- DE-A1-102006 023 688
- US-A- 3 597 994
- US-A- 3 972 390

## Beschreibung

Die Erfindung bezieht sich auf eine Lenksäule für ein Kraftfahrzeug, mit einem Energieabsorptionsteil zur Absorption von Energie im Falle eines Fahrzeugcrashs, welches hierzu an einer ersten Befestigungsstelle mit einem ersten Bauteil, und an einer zweiten Befestigungsstelle mit einem zweiten Bauteil der Lenksäule verbunden ist und welches einen zwischen der ersten Befestigungsstelle und der zweiten Befestigungsstelle sich erstreckenden Strang aufweist, der eine entlang des Verlaufs des Strangs gemessene Stranglänge aufweist, die in einem anfänglichen Zustand vor Auftreten eines Fahrzeugcrashs einen Anfangswert besitzt, wobei das erste Bauteil gegenüber dem zweiten Bauteil unter Energieabsorption durch das Energieabsorptionsteil über einen Verschiebeweg verschiebbar ist, und das erste Bauteil gegenüber dem zweiten Bauteil unter einer fortschreitenden, die Stranglänge vergrößernden Dehnung des Strangs des Energieabsorptionsteils um eine Strecke verschiebbar ist, die mindestens 10% des Anfangswerts der Stranglänge beträgt, wobei sich das Energieabsorptionsteil in eine Verschieberichtung erstreckt, entlang der sich das erste Bauteil, welches durch ein Mantelrohr oder eine Lagereinheit gebildet wird, gegenüber dem zweiten Bauteil, welches durch eine Trageinheit gebildet wird, im Crashfall verschiebt.

Lenksäulen für Kraftfahrzeuge müssen heutzutage die Sicherheitsfunktion aufweisen, dass im Falle eines Fahrzeugcrashes das Lenkrad durch den sekundären Aufprall des Fahrers in Richtung zur Fahrzeugfront unter Energieabsorption verschiebbar ist. Es soll bei dieser Verschiebung in kontrollierter Weise Energie absorbiert werden. Die Lenksäule wirkt hierbei wie ein Puffer, welcher den Fahrer über einen maximal zur Verfügung stehenden Verschiebeweg abbremst. Dadurch wird ein Teil der Bewegungsenergie des Fahrers von der Lenksäule aufgenommen (absorbiert).

Bei einer herkömmlichen Lenksäule dieser Art ist ein an das fahrerseitige Ende anschließender Abschnitt der Lenkspindel in einer Lagereinheit (auch Mantelrohr genannt) drehbar gelagert, welches von einer Trageinheit getragen wird. Im geöffneten Zustand einer Feststellvorrichtung ist die Lagereinheit gegenüber der Trageinheit in einer Verstellrichtung für eine Längenverstellung der Lenksäule und in eine Verstellrichtung für eine Höhen- oder Neigungsverstellung der Lagereinheit verstellbar, um die Position des Lenkrads einzustellen, was eine Komfortfunktion der Lenksäule darstellt. Im geschlossenen Zustand der Feststellvorrichtung ist die eingestellte Position fixiert, möglichst auch im Crashfall. Die Trageinheit ist nach Art eines Schlittens in einer am Chassis des Kraftfahrzeuges befestigten Montageeinheit verschiebbar geführt. Zwischen der Montageeinheit und der Trageinheit wirkt ein Energieabsorptionsteil in Form eines umgebogenen Blechstreifens. Im Crashfall kann sich die Trageinheit gegenüber der Montageeinheit in Richtung zur Fahrzeugfront verschieben, wobei der umgebogene Blechstreifen um eine Kante herumgezogen wird oder frei verformt wird. Auch ein Aufreißen des Blechstreifens entlang von Reißlinien ist möglich. Zudem kann eine reibschlüssige Verbindung zwischen der Trageinheit und der Montageeinheit vorgesehen sein. Durch diese Maßnahmen kann einzeln oder in Kombination miteinander Energie absorbiert werden.

Herkömmlicherweise ist eine derartige, im Crashfall Energie absorbierende Lenksäule für einen Erwachsenen, ca. 78kg schweren angegurteten Mann ausgelegt. Für leichtere oder schwerere Lenker wird somit kein optimaler Aufprallschutz erreicht. Es ist daher bereits bekannt geworden, mindestens einen pyrotechnischen Schalter vorzusehen, durch den beispielsweise mindestens ein weiterer Biegestreifen verbunden oder freigegeben werden kann, sodass eine Umschaltung zwischen verschiedenen Niveaus der Energieabsorption ermöglicht wird. Dadurch kann allerdings nur eine sehr begrenzte Zahl von unterschiedlichen Energieniveaus eingestellt werden und die Steuerung des Energieniveaus mittels solcher pyrotechnischer Schalter ist sehr aufwendig. Ein Beispiel für eine derartige Lenksäule geht aus der DE 10 2010 024 353 A1 hervor.

Aus der WO 2010/009486 A2 ist ein Eingriffsteil der Feststellvorrichtung im geschlossenen Zustand der Feststellvorrichtung mit einem unverschiebbar gegenüber der Trageinheit gehaltenen Arretierteil der Feststellvorrichtung verbunden. Das Eingriffsteil ist über einen Biegedraht mit der Lagereinheit verbunden, die die Lenkspindel drehbar lagert, und im Crashfall gegenüber dieser unter Verbiegung des Biegedrahtes verschiebbar.

Aus der WO 2009/121386 A1 geht eine verstellbare Lenksäule hervor, bei der durch die Drehung eines Spannbolzens der Feststellvorrichtung beim Öffnen und Schließen der Feststellvorrichtung ein Halteteil in und außer Eingriff mit einer Reiß-Biegelasche im Bereich eines Endabschnitts der Reiß-Biegelasche gebracht wird. Das Halteteil ist gegenüber der Trageinheit, welche die die Lenkspindel drehbar lagernde Lagereinheit trägt, in Längsrichtung der Lenkspindel unverschiebbar gehalten. Die Reiß-Biegelasche ist umgebogen und am anderen Endabschnitt an der Lagereinheit befestigt. Im Crashfall wird der durch die Feststellvorrichtung vermittelte Reibschluss zwischen der Lagereinheit und der Trageinheit überwunden und die Reiß-Biegelasche wird gebogen und aufgerissen, wobei sich die Lagereinheit unter Energieabsorption gegenüber der Trageinheit verschieben kann. Eine weitere Lenksäule dieser Art geht aus der WO 2011/147503 A1 hervor.

Weitere Lenksäulen, bei denen die Verstellung der Größe der Energieabsorption mittels pyrotechnischer Schalter erfolgt, gehen aus der EP 1 479 593, EP 1 187 752, WO 2007/048153 A2 und WO 2010/094050 A1 hervor.

Im Stand der Technik sind weiters Energieabsorptionselemente bekannt, die aus einem Kunststoff, insbesondere einem Elastomer gebildet sind, und im Crashfall zusammengepresst bzw. gestaucht werden, z.B. aus der EP 2025576 und der US 7,607,694.

Entsprechend der DE 69 501 830 T und der DE 69 508 290 T sind als Energieabsorptionselemente Biegestreifen bekannt, die in Form eines Drahtes ausgebildet sind, der auch aus Kunststoff gefertigt sein kann. Im Crashfall wird der Draht von einer Rolle abgewickelt, wobei Energie durch die Biegearbeit absorbiert wird.

Die DE 60 2004 001 741 T zeigt eine Energieabsorptionseinrichtung, bei der zwischen teleskopierbaren Rohren eine Muffe angeordnet ist, die aus Kunststoff ausgebildet sein kann und durch Aufweiten und/oder Verpressen Energie absorbiert.

Entsprechend der WO 2007/124831 A1 ist es bekannt, im Crashfall Energie durch eine Biegeumformung eines magnetorheologischen Elastomer-Werkstoffes zu absorbieren.

Bei der aus der DE 10 2004 041 086 A1 hervorgehenden Lenksäule ist ein Energieabsorptionselement vorhanden, welches einerseits an der die Lenkspindel lagernden Lagereinheit und andererseits an einer fahrzeugkarosseriefesten Chassiseinheit befestigt ist. Das Energieabsorptionsteil weist einen zwischen den Befestigungsstellen an der Lagereinheit und an der Trageinheit sich erstreckenden durchgehenden Strang auf, der im Ausgangszustand, bevor ein Fahrzeugcrash aufgetreten ist, einen wellenförmigen Verlauf aufweist. Bei Auftreten eines Fahrzeugcrashs kann die Lagereinheit gegenüber der Trageinheit verschoben werden, wobei der wellenförmige Strang zusammengeschoben wird. Es wird hierbei Biegearbeit geleistet, wodurch Energie absorbiert wird. Auch eine wabenförmige oder gitterförmige Ausgestaltung des Energieabsorptionsteils ist erwähnt. Eine Anpassung der Absorptionscharakteristik an unterschiedlich schwere Personen ist hier nicht möglich.

Aus der DE 10 2006 023 688 A1 ist ein energieabsorbierendes Streckelement bekannt, welches als Energieeabsorptionsteil zwischen der Karosserie eines Fahrzeugs und der Lenksäule eingesetzt werden kann. Die Integration des Energieabsorptionsteils in eine Lenksäule ist dabei nicht vorgesehen. Der wesentliche Anteil der Energie wird durch Verbiegung von Materialabschnitten absorbiert. Dies bedingt eine geometrisch komplexe Gestaltung in Form vom Gittern, gefalteten oder wendelförmigen Energieabsorptionsteilen, die fertigungstechnisch aufwendig sind und nicht in eine Lenksäule integriert werden können.

Ein ähnliches Energieabsorptionselement zur Anbringung zwischen Lenksäule und Fahrzeugkarosserie wird in der US 3 597 994 A beschrieben. Die Energieabsorption basiert ebenfalls im Wesentlichen auf einer Verbiegung von Materialabschnitten, was zu einem räumlich ausgedehnten und fertigungstechnisch aufwendigen Aufbau führt, der sich nicht in eine Lenksäule integrieren lässt.

Aufgabe der Erfindung ist es eine Lenksäule der eingangs genannten Art bereitzustellen, durch die in einfacher Weise eine vorteilhafte Absorption von Energie im Falle eines Fahrzeugcrashes ermöglicht wird. Erfindungsgemäß gelingt dies durch eine Lenksäule mit den Merkmalen des Anspruchs 1.

Erfindungsgemäß ist das erste Bauteil gegenüber dem zweiten Bauteil unter einer fortschreitenden, die Stranglänge vergrößernden Dehnung des Strangs des Energieabsorptionsteils um eine Strecke verschiebbar. Die vom Strang durch seine Verformung absorbierte Energie resultiert zumindest im Wesentlichen, d.h. zu mehr als 90%, aus einer die Stranglänge vergrößernden Dehnung des Strangs. Gewisse Biegungen können in den Bereichen zwischen den verbreiterten Endabschnitten und dem geradlinigen Mittelabschnitt des Strangs auftreten, wobei die durch Biegungen absorbierte Energie vergleichsweise sehr gering ist, d.h. weniger als 10% der durch die die Stranglänge vergrößernde Dehnung absorbierten Energie. Es handelt sich also im Wesentlichen um eine reine Dehnung des Strangs.

Bei der Lenksäule gemäß der Erfindung weist das Energieabsorptionsteil, welches an einer ersten Befestigungsstelle mit einem ersten Bauteil der Lenksäule und an einer zweiten Befestigungsstelle mit einem zweiten Bauteil der Lenksäule verbunden ist, einen Strang auf, der mit seiner Längserstreckung zwischen der ersten und der zweiten Befestigungsstelle verläuft. Dieser Strang kann insbesondere bandförmig oder drahtförmig bzw. stabförmig (mit unterschiedlichen Querschnittsformen) ausgebildet sein, wobei er auch Abschnitte mit sich unterscheidenden Querschnittsformen und/oder Querschnittsflächen aufweisen kann (also beispielsweise sowohl bandförmige als auch drahtförmige Abschnitte). Der Strang weist eine entlang des Verlaufs des Strangs gemessene Stranglänge auf. Falls der Strang über seine gesamte Längserstreckung geradlinig verläuft, ist die Stranglänge also die geradlinig in Richtung der Längserstreckung des Strangs gemessene Länge des Strangs. Falls der Strang durch mindesten ein Umlenkteil umgelenkt ist und somit in Richtung seiner Längserstreckung gekrümmt verläuft (also mindestens eine Biegung um eine rechtwinkelig zu seiner Längserstreckung liegende Achse aufweist), so entspricht die Stranglänge der Bogenlänge des Strangs, die auch als Länge der Rektifikationslinie bezeichnet werden kann. Die Stranglänge besitzt in einem anfänglichen Zustand, also bevor ein Fahrzeugcrash aufgetreten ist, einen Anfangswert.

Erfindungsgemäß ist das erste Bauteil gegenüber dem zweiten Bauteil unter einer fortschreitenden, die Stranglänge vergrößernden Dehnung des Strangs des Energieabsorptionsteils um eine Strecke verschiebbar, die mindestens 10%, vorzugsweise mindestens 20%, besonders bevorzugt mindestens 50%, des Anfangswerts der Stranglänge beträgt.

Im Falle eines Fahrzeugcrashs wirkt also eine Zugkraft auf das Energieabsorptionsteil ein (zwischen den beiden Befestigungsstellen), von der zumindest ein Teil auf den Strang einwirkt (es könnte auch mehr als ein zwischen den Befestigungsstellen verlaufender Strang vorgesehen sein), wodurch bei einer ausreichenden Größe der Zugkraft die Stranglänge durch Dehnung des Strangs vergrößert wird. Hierdurch wird Energie absorbiert.

Vorzugsweise beginnt die die Stranglänge vergrößernde Dehnung des Strangs bei der Verschiebung des ersten Bauteils gegenüber dem zweiten Bauteil gleich anschließend an den Beginn der Verschiebung ausgehend von einer Ausgangsposition des ersten Bauteils, welche dieses unmittelbar vor dem Fahrzeugcrash einnimmt. Denkbar und möglich wäre es auch, dass vor der die Stranglänge vergrößernden Dehnung des Strangs zumindest ein gekrümmter Abschnitt des Strangs gerade gebogen wird (hierbei kommt es also zu lokalen Dehnungen und Stauchungen). Auch nach der die Stranglänge vergrößernden Dehnung des Strangs könnte eine Biegung des Strangs anschließen.

Vorzugsweise liegt der untere Schwellenwert der auf das Energieabsorptionsteil einwirkenden Zugkraft, durch die eine die Stranglänge vergrößernde Dehnung des Strangs um mindestens 10%, vorzugsweise mindestens 20%, besonders bevorzugt mindestens 50%, des Anfangswerts der Stranglänge erfolgt, bei mehr als 1.000 N.

Vorzugsweise liegt der untere Schwellenwert der auf das Energieabsorptionsteil einwirkenden Zugkraft, durch die eine die Stranglänge vergrößernde Dehnung des Strangs um mindestens 10%, vorzugsweise mindestens 20%, besonders bevorzugt mindestens 50%, des Anfangswerts der Stranglänge erfolgt, bei weniger als 100.000 N.

Vorteilhafterweise besteht der Strang oder zumindest ein Abschnitt des Strangs, der bei der Verschiebung des ersten Bauteils gegenüber dem zweiten Bauteil gedehnt wird, aus einem Kunststoff. Der Kunststoff ist hierbei günstigerweise aus unvernetzten Kettenmolekülen ausgebildet, also insbesondere ein Thermoplast, z.B. Polyethylen.

Kunststoffe, insbesondere die genannten, weisen (jedenfalls häufig) die Eigenschaft auf, dass die Widerstandskraft, die sie einer Dehnung entgegensetzen, umso größer ist, je schneller die Geschwindigkeit ist, mit der die Dehnung erfolgt. Ein solcher Kunststoff wird vorzugsweise eingesetzt, womit die Energieabsorption des Energieabsorptionsteils von der Geschwindigkeit abhängt, mit der der Strang gedehnt wird und mit steigender Geschwindigkeit zunimmt. Die anfängliche Geschwindigkeit, mit der das erste Bauteil gegenüber dem zweiten Bauteil im Crashfall verschoben wird, hängt aber von der Stärke des Aufpralls des Fahrers auf das Lenkrad ab, entsprechend der dadurch bewirkten Impuls- und Energieübertragung, ist also insbesondere von der Masse des Fahrers und der Aufprallgeschwindigkeit auf das Lenkrad abhängig.

Der Strang oder zumindest der Abschnitt des Strangs könnte auch nicht vollständig, sondern nur zum Großteil aus einem Kunststoff, insbesondere einem Thermoplast, z.B. Polyethylen (=PE) bestehen, vorzugsweise zu über 90 Gew-%. Beispielsweise könnte an der äußeren Oberfläche eine Beschichtung aus einem anderen Material vorhanden sein.

In einer vorteilhaften Ausführungsform besteht das Energieabsorptionsteil insgesamt zumindest zum Großteil, vorzugsweise zu über 90 Gew-%, besonders bevorzugt insgesamt, aus Kunststoff, insbesondere aus einem Thermoplast, z.B. Polyethylen.

Es ist möglich, dass das Energieabsorptionsteil zusätzlich zum zuvor beschriebenen Strang ein oder mehrere weitere Stränge aufweist, welche bei der Verschiebung des ersten Bauteils gegenüber dem zweiten Bauteil vorzugsweise ebenfalls gedehnt werden. Diese können gleich wie der beschriebene Strang ausgebildet sein und insbesondere parallel zu diesem verlaufen.

Die Lenksäule könnte auch mehr als ein Energieabsorptionsteil aufweisen. Falls mehr als ein Energieabsorptionsteil vorhanden ist, können die Energieabsorptionsteile in einer möglichen Ausbildungsform gleich oder spiegelbildlich ausgebildet sein.

Vorteilhafterweise ist das erste Bauteil gegenüber dem zweiten Bauteil zumindest über eine Strecke von 2cm im Wesentlichen nur durch die die Stranglänge vergrößernde Dehnung (also ohne gleichzeitige Stauchung, wie sie bei einer Biegung auftritt) des Strangs oder mindestens eines der Stränge des Energieabsorptionsteils verschiebbar, d.h. ohne eine solche Dehnung des Strangs oder mindestens eines der Stränge wäre das erste Bauteil gegenüber dem zweiten Bauteil nicht verschiebbar oder kaum verschiebbar und die Strecke der durch diese Dehnung des Strangs bzw. mindestens eines der Stränge ermöglichten Verschiebbarkeit beträgt mindestens 2cm. "Im Wesentlichen nur" bzw. "kaum" verschiebbar bedeutet hierbei, dass eine Verschiebbarkeit beispielsweise durch eine Biegung, insbesondere Geradebiegung, des Strangs oder eines Abschnittes hiervon vergleichsweise sehr klein ist, d.h. weniger als 10% der durch die die Stranglänge vergrößernde Dehnung bewirkte Verschiebbarkeit beträgt.
Eine vorteilhafte Ausbildung der Erfindung sieht vor, dass die Lenksäule eine Lagereinheit aufweist, die einen an das fahrerseitige Ende der Lenksäule anschließenden Lenkspindelabschnitt, der das Lenkrad trägt, drehbar lagert und die von einer Trageinheit getragen ist.
In einer möglichen Ausführungsform ist das Energieabsorptionsteil insgesamt band oder draht- bzw. stabförmig ausgebildet.
Es ist auch denkbar und möglich, das Energieabsorptionsteil als rohrförmiges oder schlauchförmiges Teil auszubilden. Insbesondere kann ein derartig hohl ausgebildetes Energieabsorptionsteil eines der Bauteile, d.h. das erste oder das zweite Bauteil, also beispielsweise das Mantelrohr, zumindest teilweise, umschließen. Das Energieabsorptionsteil gemäß der Erfindung erstreckt sich in eine Verschieberichtung, entlang der sich das erste Bauteil gegenüber dem zweiten Bauteil, also beispielsweise das Mantelrohr oder die Lagereinheit gegenüber der Trageinheit, im Crashfall verschiebt.
In einer vorteilhaften Ausführungsform der Erfindung ist die Lagereinheit in einem geöffneten Zustand einer Feststellvorrichtung gegenüber der Trageinheit verstellbar und im geschlossenen Zustand der Feststellvorrichtung gegenüber der Trageinheit festgestellt. Im geöffneten Zustand der Feststellvorrichtung kann somit die Position des fahrerseitigen Endes der Lenkspindel, also die Position des Lenkrades verstellt werden. Es wird hierbei günstigerweise zumindest eine Längenverstellung, also eine Verstellung der Lagereinheit in eine parallel zum das Lenkrad tragenden Lenkspindelabschnitt ermöglicht, günstigerweise auch eine Neigungs- bzw. Höhenverstellung. Derartige verstellbare Lenksäulen sind in vielfältigen Ausführungsformen bekannt.
In einer möglichen Ausführungsform der Erfindung wird hierbei das erste Bauteil von der Lagereinheit gebildet und das zweite Bauteil ist im geschlossenen Zustand der Feststellvorrichtung mit der Trageinheit bezogen auf die Richtung der Längenverstellung formschlüssig verbunden, während das zweite Bauteil im geöffneten Zustand der Feststellvorrichtung gegenüber der Trageinheit zusammen mit dieser zumindest in die Richtung der Längenverstellung verschiebbar ist. Im Crashfall kann dann die Lagereinheit gegenüber dem zweiten Bauteil (und somit auch gegenüber der Trageinheit) unter Energieabsorption verschoben werden.

Eine andere mögliche Ausführungsform der Erfindung sieht vor, dass das erste Bauteil von der Lagereinheit gebildet wird und das Energieabsorptionsteil im geschlossenen Zustand der Feststellvorrichtung mit dem zweiten Bauteil, welches von der Trageinheit oder einem hiermit zumindest in Richtung der Längenverstellung formschlüssig verbundenen Teil gebildet wird, bezogen auf die Richtung der Längenverstellung formschlüssig verbunden ist bzw. es zu einer solchen formschlüssige Verbindung zumindest im Falle eines Fahrzeugcrashs nach einer anfänglichen Verschiebung der Lagereinheit gegenüber der Trageinheit kommt. Diese anfängliche Verschiebung ist hierbei vergleichsweise klein, d.h. kleiner als ein Zehntel der Stranglänge. Im geöffneten Zustand der Feststellvorrichtung ist die Lagereinheit und mit ihr das Energieabsorptionsteil gegenüber der Trageinheit und dem zweiten Bauteil in die Richtung der Längenverstellung verschiebbar.

Eine weitere mögliche Ausführungsform der Erfindung sieht vor, dass das erste Bauteil von der Trageinheit gebildet wird und das zweite Bauteil eine am Fahrzeugchassis befestigbare Montageeinheit ist. Die Trageinheit ist hierbei von der Montageeinheit günstigerweise nach Art eines Schlittens verschiebbar gelagert. Im Crashfall kann sich die Trageinheit unter Energieabsorption gegenüber der Montageeinheit in Richtung zur Fahrzeugfront verschieben.

Die spezifische Anordnung und Darstellung des Energieabsorptionsteils ist nach dem jeweiligen Basis-Design der Lenksäule und den jeweiligen technischen Anforderungen an Bauraum und Absorptionsverhalten auszulegen. Dabei resultiert die Energieabsorption vorteilhafterweise zumindest großteils, vorzugsweise im Wesentlichen, aus einer plastischen Dehnung des Werkstoffs des Energieabsorptionsteils, die mit einer Verlängerung des mindestens einen Strangs des Energieabsorptionsteils verbunden ist. Die im Stand der Technik bekannten Methoden, eine Umformung von Energieabsorptionsteilen zur Energieabsorption einzusetzen, sind davon verschieden, weil der Anteil der plastischen Dehnung an der Umformarbeit hier nur sehr gering im Vergleich zur gesamten aufgewendeten Umformarbeit ist. Im Falle einer Biegung oder Stauchung von Streifen, wie sie im Stand der Technik bekannt sind, erfolgt die Energieabsorption im Wesentlichen durch die Biegearbeit oder durch die Umformarbeit zum Stauchen des Streifens und nicht durch eine Verlängerung des Streifens. In besonderer Weise ist die plastische Dehnung von Kunststoffen, insbesondere thermoplastischen Kunststoffen, vorteilhaft, da hier das Dehnungsverhalten stark von der Dehnungsgeschwindigkeit abhängig ist und sich damit an das erforderliche Energieabsorptionsniveau in gewissen Grenzen selbsttätig anpasst.

Weitere Vorteile und Einzelheiten der Erfindung werden im Folgenden anhand der beiliegenden Zeichnung erläutert. In dieser zeigen:
- Fig. 1: eine Seitenansicht einer Lenksäule gemäß einem ersten Ausführungsbeispiel der Erfindung;
- Fig. 2: einen Schnitt entlang der Linie BB von Fig. 1;
- Fig. 3: einen Schnitt entlang der Linie AA von Fig. 1;
- Fig. 4: eine Schrägsicht der Lenksäule von Fig. 1;
- Fig. 5: eine Schrägsicht der Lagereinheit mit dem von ihr drehbar gelagerten Abschnitt der Lenkspindel und dem an ihr verschiebbar geführten Eingriffsteil;
- Fig. 6: ein Schnitt entlang der Linie CC von Fig. 2 (Teile der Lenksäule ausgeblendet);
- Fig. 7a: eine Darstellung entsprechend Fig. 6, aber teilweise entlang der Linie DD von Fig. 2 aufgeschnitten;
- Fig. 7b: eine Darstellung entsprechend Fig. 7a mit einer zusätzlichen Darstellung eines Scherbolzens;
- Fig. 8: einen Schnitt entlang der Linie DD von Fig. 2, nach einem Fahrzeugcrash;
- Fig. 9: eine Explosionsdarstellung der Teile von Fig. 5 (ohne den Lenkspindelabschnitt);
- Fig. 10: eine Schrägsicht einer Lenksäule gemäß einer zweiten Ausführungsform der Erfindung;
- Fig. 11: eine Schrägsicht der Lenksäule von Fig. 10 aus einer anderen Blickrichtung;
- Fig. 12: eine Schrägsicht einer Lenksäule gemäß einer dritten Ausführungsform der Erfindung;
- Fig. 13: eine stark schematisierte Darstellung der Anordnung des Energieabsorptionsteils gemäß einer weiteren möglichen Ausführungsform der Erfindung;
- Fig. 14 und Fig. 15: eine stark schematisierte Darstellung einer weiteren Ausführungsform der Erfindung, abgewandelt zur Ausführungsform, wie sie den Figuren 4 und 5 entnommen werden kann, vor einem Crash;
- Fig. 16: stark schematisierte Darstellung der Ausführungsform der Erfindung entsprechend Fig. 15 nach einem Crash.

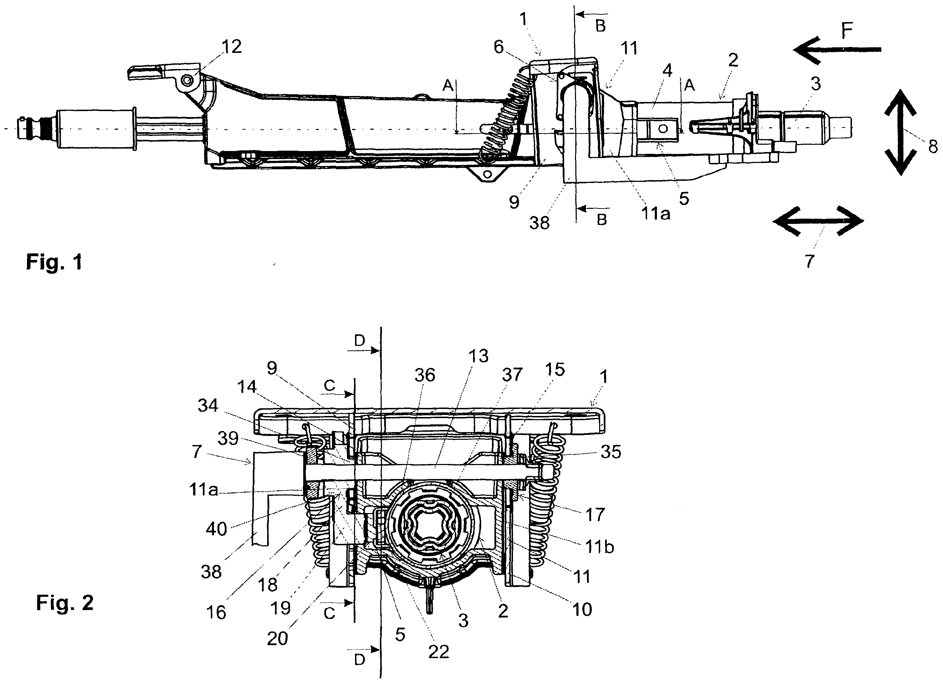

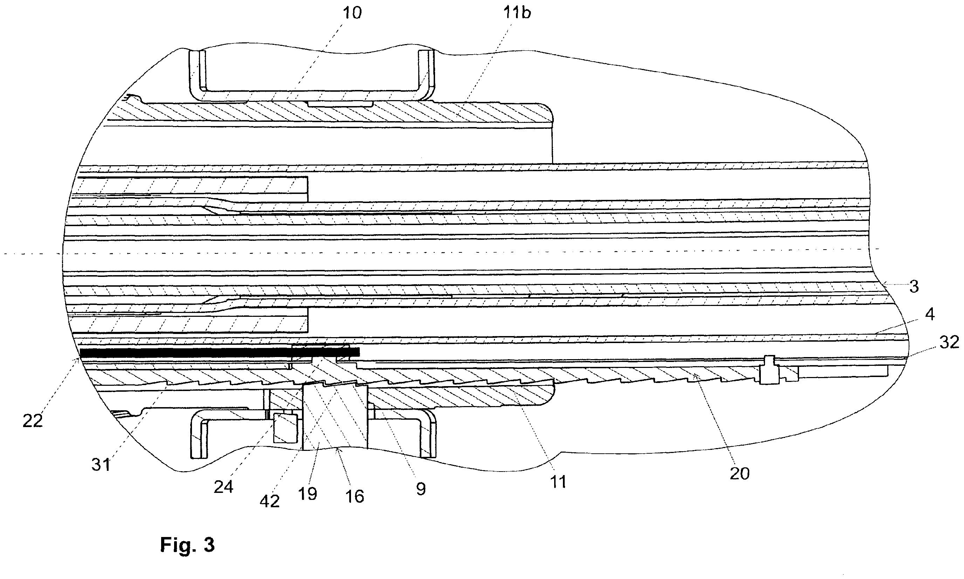

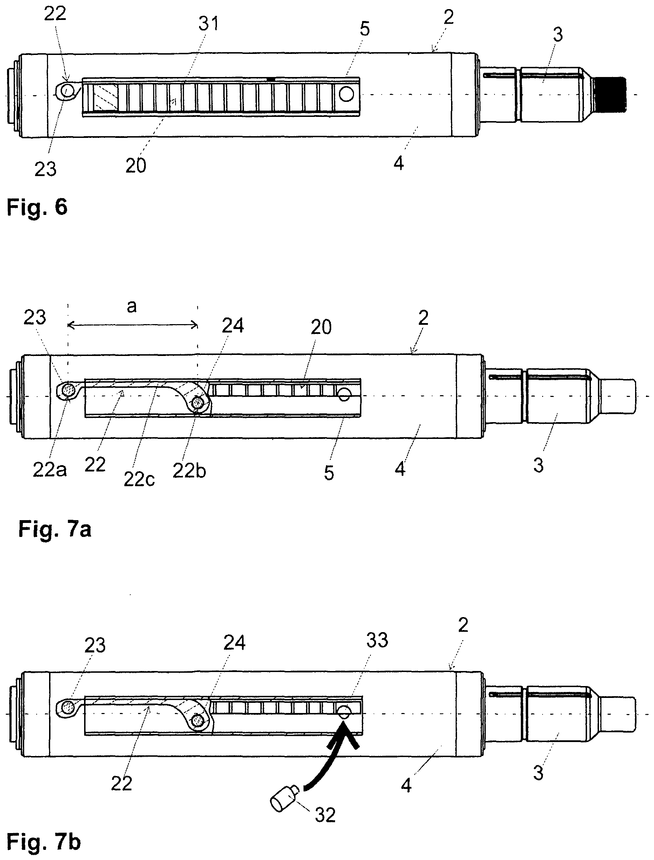

Ein erstes Ausführungsbeispiel einer erfindungsgemäßen Lenksäule ist in den Fig. 1 bis 9 dargestellt. Die Lenksäule umfasst eine Trageinheit 1, die mit dem Chassis des Kraftfahrzeugs verbunden werden kann, und eine Lagereinheit 2, welche einen an das fahrerseitige bzw. lenkradseitige Ende der Lenksäule anschließenden Lenkspindelabschnitt 3 drehbar lagert. Die Lagereinheit 2 umfasst im gezeigten Ausführungsbeispiel ein Mantelrohr 4 und ein starr mit diesem verbundenes, beispielsweise durch Verschweißung, und in Längsrichtung 7 des Lenkspindelabschnitts 3 sich erstreckendes Profil 5.

Im geöffneten Zustand einer Feststellvorrichtung 6 ist die Lagereinheit 2 in die Längsrichtung 7 der Lenksäule (=in Richtung der Längsachse des Lenkspindelabschnitts 3) für eine Längenverstellung der Lenksäule und in die Stellrichtung 8 für eine Höhen- bzw. Neigungsverstellung der Lenksäule gegenüber der Trageinheit 1 verstellbar. Im geschlossenen Zustand der Feststellvorrichtung 6 ist die eingestellte Position der Lagereinheit 2 gegenüber der Trageinheit 1 festgestellt.

Bezogen auf die Längenverstellung bleibt die Position der Lagereinheit 2 relativ zur Trageinheit 1 erhalten, solange eine in Längsrichtung 7 wirkende Kraft F (in Richtung zur Fahrzeugfront) unterhalb eines vorgegebenen Schwellenwerts liegt (=Normalbetrieb). Wenn dieser Schwellenwert überschritten wird (=Crashfall), so ist die Lagereinheit 2 gegenüber der Trageinheit 1 unter Energieabsorption in Längsrichtung 7 der Lenksäule verschiebbar, wie aus dem Folgenden hervorgehen wird. Bei betriebsgemäßem Gebrauch der Lenksäule befindet sich die Feststellvorrichtung 6 im Crashfall im geschlossenen Zustand.

In Richtung der Höhen- bzw. Neigungsverstellung wird im geschlossenen Zustand der Feststellvorrichtung 6 eine möglichst hohe Feststellkraft aufgebracht.

Im gezeigten Ausführungsbeispiel ist die Lagereinheit 2 zwischen Seitenwangen 9, 10 der Trageinheit 1 angeordnet. Zwischen den Seitenwangen 9, 10 der Trageinheit 1 und der Lagereinheit 2 liegen weitere Seitenschenkel 11a, 11b einer Zwischeneinheit 11, die die Lagereinheit 2, zumindest über einen Großteil ihres Umfangs, umgibt. Die Zwischeneinheit 11 ist im geöffneten Zustand der Feststellvorrichtung 6 um eine Schwenkachse 12 gegenüber der Trageinheit 1 verschwenkbar. Die Schwenkachse 12 ist in einem Halteelement gelagert, das mit der Fahrzeugkarosserie fest verbunden werden kann. Alternativ zum dargestellten Ausführungsbeispiel ist es denkbar und möglich, die Trageinheit 1 derart auszubilden, dass das Halteelement integraler Bestandteil der Trageinheit ist. Die Zwischeneinheit 11 ist mit der Trageinheit 1 bezogen auf die Längsrichtung 7 der Lenksäule unverschiebbar verbunden, beispielsweise (auch) über die Ausbildung dieser Schwenkachse 12. Die Lagereinheit 2 ist gegenüber der Zwischeneinheit 11 in die Stellrichtung 8 unverschiebbar, aber im geöffneten Zustand der Feststellvorrichtung 6 zur Längseinstellung der Lenksäule gegenüber der Zwischeneinheit 11 in die Längsrichtung 7 verschiebbar.

Die Feststellvorrichtung 6 umfasst einen rechtwinkelig zum Lenkspindelabschnitt 3 verlaufenden Spannbolzen 13, der Öffnungen 14, 15 in den Seitenwangen 9, 10, die in Form von in die Stellrichtung 8 verlaufenden Langlöchern ausgebildet sind, und Öffnungen in den Seitenschenkeln 11a, 11b der Zwischeneinheit 11 durchsetzt. Auf dem Spannbolzen 13 sind beidseitig der Seitenwangen 9, 10 der Trageinheit 1 Arretierteile 16, 17 angeordnet, die vom Spannbolzen 13 durch Öffnungen durchsetzt werden und in Richtung der Achse des Spannbolzens 13 axial verschiebbar sind.

Das eine Arretierteil 16 besitzt einen Abschnitt, in welchem es vom Spannbolzen 13 durchsetzt wird und einen über einen Verbindungsabschnitt 18 mit diesem verbundenen Abschnitt 19, in welchem es wie weiter unten beschrieben mit einem Eingriffsteil 20 zusammenwirkt.

Das Arretierteil 17 und das Arretierteil 16 im Bereich seines vom Spannbolzen 13 durchsetzten Abschnitts werden im geschlossenen Zustand der Feststellvorrichtung 6 an die Seitenwangen 9, 10 der Trageinheit 1 angedrückt, um die Verstellung der Lenksäule in die Stellrichtung 8 festzustellen. Die Feststellung in die Verstellrichtung 8 kann durch Reibschluss erfolgen. Auch formschlüssig zusammenwirkende Elemente, beispielsweise Verzahnungen können vorgesehen sein.

Der Abschnitt 19 des Arretierteils 16 durchsetzt eine Öffnung in der Seitenwange 9 (die Seitenwange 9 könnte auch oberhalb des Abschnitts 19 des Arretierteils 16 enden) und eine Öffnung im Seitenschenkel 11a der Zwischeneinheit 11 und ist im geschlossenen Zustand des Feststellvorrichtung 6 mit dem Eingriffsteil 20 verspannt. Der Abschnitt 19 des Arretierteils 16, der als Ganzes auf einer Seite des Spannbolzens 13 liegt, ist gegen eine Verschiebung in Längsrichtung 7 der Lenksäule gegenüber der Trageinheit 1 von den Rändern der durchsetzten Öffnung in der Seitenwange 9 und/oder von den Rändern der durchsetzten Öffnung im Seitenschenkel 11a der Zwischeneinheit 11 unverschiebbar gehalten.

Der Abschnitt 19 des Arretierteils 16 besitzt zur Blockierung einer Verschiebung des Eingriffsteils 20 im geschlossenen Zustand der Feststellvorrichtung 6 gegenüber dem Arretierteil 16 in Längsrichtung 7 der Lenksäule eine am Eingriffsteil 20 anliegende Verzahnung 42, die mit einer Verzahnung 31 des Eingriffsteils zusammenwirkt. Falls beim Schließen des Feststellvorrichtung 6 diese beiden Verzahnungen in einer Zahn-auf-Zahn-Stellung aneinander zu liegen kommen, so wird zumindest nach einer geringfügigen anfänglichen Verschiebung (die kleiner als der Zahnabstand der Verzahnung ist) eine weitere Verschiebung des Eingriffsteils 20 gegenüber dem Arretierteil 16 blockiert.

Auch andere formschlüssige Verbindungen zwischen dem Arretierteil 16 und dem Eingriffsteil 20 sind denkbar und möglich, beispielsweise über in Löcher eingreifende Bolzen.

Insoweit die Lenksäule bislang beschrieben worden ist, entspricht sie dem Stand der Technik, vgl. die in der Beschreibungseinleitung genannte WO 2010/009486 A2.

Die Lagereinheit 2 und das Eingriffsteil 20 stellen ein erstes und ein zweites Bauteil der Lenksäule dar, die durch ein Energieabsorptionsteil 22 miteinander verbunden sind, welches zwischen diesen Bauteilen verläuft. Hierzu ist das Energieabsorptionsteil 22 im Bereich eines seiner Enden an einer ersten Befestigungsstelle mit der Lagereinheit 2 verbunden, wobei durch diese Verbindung zumindest ein Formschluss bezogen auf die Längsrichtung 7 ausgebildet wird. Im Ausführungsbeispiel ist hierzu das Energieabsorptionsteil an der ersten Befestigungsstelle mit einer Öffnung 22a versehen, in die ein am Mantelrohr 4 festgelegter Stift 23 eingreift.

Andererseits ist das Energieabsorptionsteil 22 im Bereich seines anderen Endes an einer zweiten Befestigungsstelle mit dem Eingriffsteil 20 verbunden, wobei durch diese Verbindung zumindest ein Formschluss zwischen dem Eingriffsteil 20 und dem Energieabsorptionsteil 22 bezogen auf die Längsrichtung 7 hergestellt ist. Im Ausführungsbeispiel ist hierzu das Energieabsorptionsteil 22 an der zweiten Befestigungsstelle mit einer Öffnung 22b versehen, in die ein am Eingriffsteil 20 festgelegter Stift 24 ragt.

Das Energieabsorptionsteil 22 erstreckt sich im Ausführungsbeispiel durch einen Zwischenraum zwischen dem Mantelrohr 4 und dem Profil 5, wobei der Stift 24 durch ein in die Längsrichtung 7 verlaufendes Langloch des Profils 5 ragt. Dadurch wird auch eine Führung des Eingriffsteils 20 in die Längsrichtung 7 ausgebildet. Eine solche Längsführung für das Eingriffsteil 20 könnte auch entfallen oder in anderer Weise ausgebildet sein.

Die Befestigung des Energieabsorptionsteils 22 an der Lagereinheit 2 und/oder am Eingriffsteil 20 könnte auch in anderer Weise als dargestellt ausgebildet sein. Insbesondere sind hier Kleben, Schweißen oder Klemmen als mögliche Verbindungstechniken zu nennen.

Das Profil 5 könnte auch entfallen, wobei das Eingriffsteil 20 direkt am Mantelrohr 4 anliegen könnte. Das Energieabsorptionsteil 22 könnte dann neben dem Eingriffsteil 20 liegen (zumindest über einen Teil seiner Längserstreckung) oder am Ende des Eingriffsteils 20 mit diesem verbunden sein.

Das Energieabsorptionsteil 22 besitzt einen zwischen der ersten und der zweiten Befestigungsstelle sich erstreckenden Strang 22c. Der Strang 22c ist also derjenige Teil des Energieabsorptionsteils 22, der von der Öffnung 22a bis zur Öffnung 22b verläuft. In diesem Ausführungsbeispiel wird das Energieabsorptionsteil 22 also im Wesentlichen vom Strang 22c gebildet. Abgesehen von verbreiterten Endabschnitten anschließend an die Öffnungen 22a, 22b erstreckt sich der Strang 22c im Ausführungsbeispiel geradlinig. Die Stranglänge entspricht im Ausführungsbeispiel annähernd dem in die weiter unten erläuterte Verschieberichtung (diese entspricht in diesem Ausführungsbeispiel der Längsrichtung 7) gemessenen Abstand a zwischen den Befestigungsstellen.

Das Energieabsorptionsteil 22 besteht im Ausführungsbeispiel insgesamt aus einem dehnbaren Kunststoff. Insbesondere ist es aus einem Thermoplast, beispielsweise Polyethylen, ausgebildet, dessen Kettenmoleküle unvernetzt sind. Beispielsweise könnten auch die verbreiterten Endbereiche des Energieabsorptionsteils 22, in denen die Öffnungen 22a, 22b ausgebildet sind, aus Metall ausgebildet sein und der dazwischen liegende geradlinig verlaufende Abschnitt könnte aus Kunststoff, insbesondere der zuvor genannten Art, bestehen.

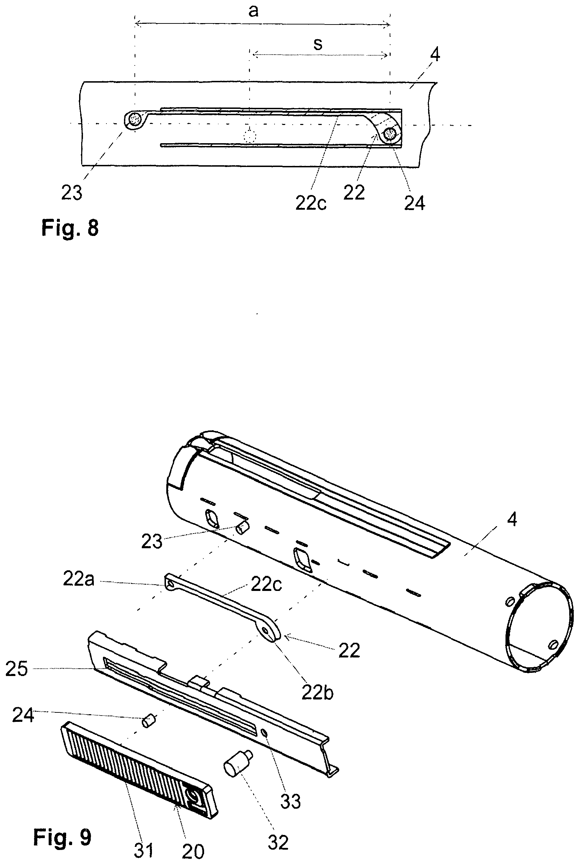

Im Normalbetrieb ist das Eingriffsteil 20 gegenüber der Lagereinheit 2 in Längsrichtung 7 unverschiebbar gehalten. Dies kann nur durch Verbindung der beiden Teile über das mindestens eine Energieabsorptionsteil 22 bewirkt sein. Im Ausführungsbeispiel ist zusätzlich ein in die Längsrichtung 7 unverschiebbar mit dem Arretierteil 20 verbundener Scherstift 32 vorhanden, der in eine Öffnung 33 (vgl. Fig. 9) des Profils 5 eingreift. Wenn in Längsrichtung 7 eine einen vorgebbaren Schwellenwert überschreitende Kraft ausgeübt wird (=Crashfall), so wird der Scherstift 32 abgeschert.

Da im Normalbetrieb (=wenn im geschlossenen Zustand der Feststellvorrichtung 6 die in Längsrichtung 7 auf die Lagereinheit 2 einwirkende Kraft Null ist oder unterhalb des Schwellenwerts liegt) das Eingriffsteil 20 bezogen auf die Längsrichtung 7 der Lenksäule unverschiebbar gegenüber der Lagereinheit 2 gehalten ist, wird im geschlossenen Zustand der Feststellvorrichtung 6 durch das Zusammenwirken des Abschnitts 19 des Arretierteils 16 mit dem Eingriffsteil 20 eine Feststellung der Lagereinheit 2 gegenüber der Trageinheit 1 in Längsrichtung 7 der Lenksäule bewirkt. Zusätzliche Feststellelemente zur Feststellung der Längsverstellung können vorgesehen sein. Im gezeigten Ausführungsbeispiel weisen der vom Spannbolzen 13 durchsetzte Abschnitt des Arretierteils 16 und das Arretierteil 17 Fortsätze 34, 35 auf, die durch die Öffnungen 14, 15 in den Seitenwangen 9, 10 der Trageinheit 1 ragen und an die Seitenschenkel 11a, 11b der Zwischeneinheit 11 angepresst sind. Dadurch werden Anlageabschnitte 36, 37 der Zwischeneinheit 11 an das Mantelrohr 4 angedrückt und halten dieses reibschlüssig, oder auch formschlüssig, gegen eine Verschiebung in Längsrichtung 7 der Lenksäule mit einer Haltekraft (die in den Schwellenwert für die in Längsrichtung der Lenksäule wirkende Kraft eingeht, oberhalb von der es zu einer Verschiebung der Lagereinheit 2 gegenüber der Trageinheit 1 kommt).

Die Feststellvorrichtung 6 kann in herkömmlicher Weise ausgebildet sein. Beispielsweise ist ein zum Öffnen und Schließen der Feststellvorrichtung 6 dienender Spannhebel 38 mit einer Nockenscheibe 39 verbunden, die er bei einer Verdrehung um die Achse des Spannbolzens 13 mitnimmt und die mit einer Kulissenscheibe zusammenwirkt. Die Kulissenscheibe ist hier einteilig mit dem Arretierteil 16 ausgebildet. Auch eine separate Kulissenscheibe kann vorhanden sein. Weiter können auch bekannte Anordnungen mit Wälzkörpern als Spannsystem eingesetzt sein. Auch andere Ausbildungen der Feststellvorrichtung 6 sind denkbar und möglich.

Wenn die Feststellvorrichtung 6 ausgehend von ihrem geöffneten Zustand geschlossen wird, so werden die Arretierteile 16, 17 in axialer Richtung des Spannbolzens 13 verstellt. Hierbei kommen die Feststellelemente für die Höhen- bzw. Neigungsverstellung in Eingriff (durch Andrücken der Reibflächen der Arretierteile 16, 17 an die Reibflächen der Seitenwangen 9, 10). Weiters wird der im geöffneten Zustand der Feststellvorrichtung 6 vom Eingriffsteil 20 beabstandete Abschnitt 19 des Arretierteils 16 an das Eingriffsteil 20 angedrückt. Weiters werden die gegebenenfalls vorhandenen Fortsätze 34, 35 an die Zwischeneinheit 11 angedrückt. Die Höhen- bzw. Neigungsverstellung und die Längsverstellung sind somit festgestellt.

Im Crashfall wird durch die sekundäre Kollision des Fahrers gegen das Lenkrad eine Kraft ausgeübt, die mehr oder weniger in Fahrtrichtung weist. Zumindest eine Komponente dieser Kraft stellt eine in die Längsrichtung 7 auf den Lenkspindelabschnitt 2 und über diesen auf die Lagereinheit 2 einwirkende Kraft F dar. Wenn die Kraft F einen Schwellenwert überschreitet, so wird der Scherstift 32 abgeschert und die Lagereinheit 2 in Längsrichtung 7 gegenüber der Trageinheit 1 (in eine zur Fahrzeugfront weisende Richtung) verschoben, wobei sich teleskopierbare Abschnitte der Lenkspindel ineinander schieben und sich die Lagereinheit 2 gegenüber dem vom Arretierteil 16 gehaltenen Eingriffsteil 20 verschiebt. Die Längsrichtung 7 stellt in diesem Ausführungsbeispiel die Verschieberichtung zwischen den beiden durch das Energieabsorptionsteil 22 verbundenen Bauteilen (also im Ausführungsbeispiel die Lagereinheit 2 und das Eingriffsteil 20) im Crashfall dar. Bei dieser Verschiebung wird der Strang 22c des Energieabsorptionsteils 22 gedehnt, wobei sich die Stranglänge zumindest im Wesentlichen um die Strecke der Verschiebung der Lagereinheit 2 vergrößert. Die die Stranglänge vergrößernde Dehnung des Strangs 22c erfolgt im Wesentlichen im geradlinig verlaufenden Abschnitt des Strangs 22c.

Durch die vom Strang 22c der Vergrößerung seiner Stranglänge entgegengesetzte Widerstandskraft wird vom Energieabsorptionsteil 22 bei der Verschiebung der Lagereinheit 2 gegenüber dem Eingriffsteil 20 Energie absorbiert, wobei die derart absorbierte Energie aus dem Produkt Widerstandskraft mal Verschiebeweg resultiert, bzw. - genauer gesagt - insbesondere bei einer veränderlichen Verschiebekraft aus dem integral der Verschiebekraft über den Verschiebeweg.

Die vom Strang 22c durch seine Verformung absorbierte Energie resultiert zumindest im Wesentlichen (d.h. zu mehr als 90%) aus einer die Stranglänge vergrößernden Dehnung des Strangs 22c. Gewisse Biegungen können in den Bereichen zwischen den verbreiterten Endabschnitten und dem geradlinigen Mittelabschnitt des Strangs 22c auftreten, wobei die dadurch absorbierte Energie vergleichsweise sehr gering ist (weniger als 10% der durch die die Stranglänge vergrößernde Dehnung absorbierte Energie). Es handelt sich also im Wesentlichen um eine reine Dehnung des Strangs.

Unter zunehmender Vergrößerung der Stranglänge durch die Dehnung des Strangs 22c kann die Lagereinheit 2 um eine Strecke s verschoben werden, also zumindest im Wesentlichen die Stranglänge um diese Strecke s vergrößert werden, die mindestens 10% des Anfangswerts der Stranglänge beträgt. Der Strang 22c kann also durch die Verschiebung der Lagereinheit 2 gegenüber dem Eingriffsteil 20 um mindestens 10% in seiner Stranglänge gedehnt werden. Bevorzugt ist ein größerer Wert der Dehnbarkeit von mindestens 20%, besonders bevorzugt von mindestens 50%. In der Praxis kann ein demgegenüber noch größerer Wert von 100% und mehr vorgesehen sein.

Die Verschiebbarkeit um die Strecke s wird also zumindest im Wesentlichen (d.h. zu mehr als 90%) erst durch die Dehnung des Strangs ermöglicht, d.h. wenn der Strang 22c nicht dehnbar wäre, wären die Lagereinheit 2 und das Eingriffsteil 20 bis zu einem den genannten Schwellenwert der Kraft wesentlich übersteigenden Wert (z.B. zumindest bis zum zweifachen des genannten Schwellenwertes der Kraft) zumindest weitgehend unverschiebbar verbunden, beispielsweise bis die genannte erste oder zweite Befestigungsstelle brechen würde.

Der Endzustand nach einem Fahrzeugcrash ist in Fig. 8 dargestellt. Die ursprüngliche Position der ersten Befestigungsstelle, an der das Energieabsorptionsteil 22 an der Lagereinheit 2 befestigt ist, ist in Fig. 8 durch eine strichlierte Linie angedeutet.

Das Ende des Verschiebeweges, über den die Lagereinheit 2 im Crashfall gegenüber dem Eingriffsteil 20 verschiebbar ist, also die maximale Strecke der Verschiebbarkeit entlang des Verschiebeweges, kann durch einen entsprechenden, beispielsweise zwischen der Lagereinheit 2 und der Trageinheit 1 wirkenden, Anschlag vorgegeben sein. Vorteilhafterweise beträgt der maximale Verschiebeweg mindestens 3cm, vorzugsweise mindestens 4cm.

Der Strang 22c besteht vorteilhafterweise aus einem solchen Kunststoffmaterial, das einer Dehnung eine umso höhere Widerstandskraft entgegensetzt, je höher die Geschwindigkeit der Dehnung ist. Die Energieabsorption passt sich dadurch selbsttätig an die Heftigkeit des Aufpralls an, die von der Masse des Fahrers und der Aufprallgeschwindigkeit des Fahrers auf das Lenkrad abhängt.

Das Energieabsorptionsteil 22 ist günstigerweise so ausgelegt, dass, zumindest bei einem gegen Null gehenden Schwellenwert der Geschwindigkeit der Verschiebung der Lagereinheit 2 gegenüber dem Eingriffsteil 20, eine Vergrößerung der Stranglänge um mindestens 10% des Anfangswerts der Stranglänge durch eine auf das Energieabsorptionsteil 22 einwirkende Zugkraft bewirkt wird, die im Bereich von 1.000 N bis 10.000 N liegt. Günstigerweise ist dies für alle bei Fahrzeugcrashs üblicherweise vorkommenden Verschiebegeschwindigkeiten der Lagereinheit 2 der Fall.

Der Scherstift 32 des Eingriffsteils 20 könnte auch entfallen. Das Eingriffsteil 20 könnte auch in anderer Weise in einer Ausgangsstellung gehalten sein, aus der es erst unter erhöhter Kraft verschiebbar ist, beispielsweise indem Stift 24 eine das Langloch 25 verjüngende Nase überfahren muss.

Auch auf beiden Seiten der Lagereinheit 2 könnten in der beschriebenen Weise ausgebildete Energieabsorptionseinrichtungen für die Längsverschiebung der Lagereinheit 2 im Crashfall vorhanden sein.

Obwohl eine Ausbildung mit auf beiden Seiten der Lagereinheit 2 angeordneten Seitenwangen 9, 10 bevorzugt ist, gegen welche im geschlossenen Zustand der Feststellvorrichtung 6 Teile der Feststellvorrichtung verspannt werden, sind auch Ausbildungen denkbar und möglich, bei denen die Trageinheit nur eine auf einer Seite der Lagereinheit 2 liegende Seitenwange aufweist.

Andererseits ist es auch möglich, beidseits des Mantelrohrs 4 entsprechende Abschnitte 19 vorzusehen, die in jeweils zugeordnete Eingriffsteile 20 formschlüssig eingreifen, wobei zwischen dem Eingriffsteil 20 und der Lagereinheit 2 jeweils ein dehnbares Energieabsorptionsteil 22 verläuft.

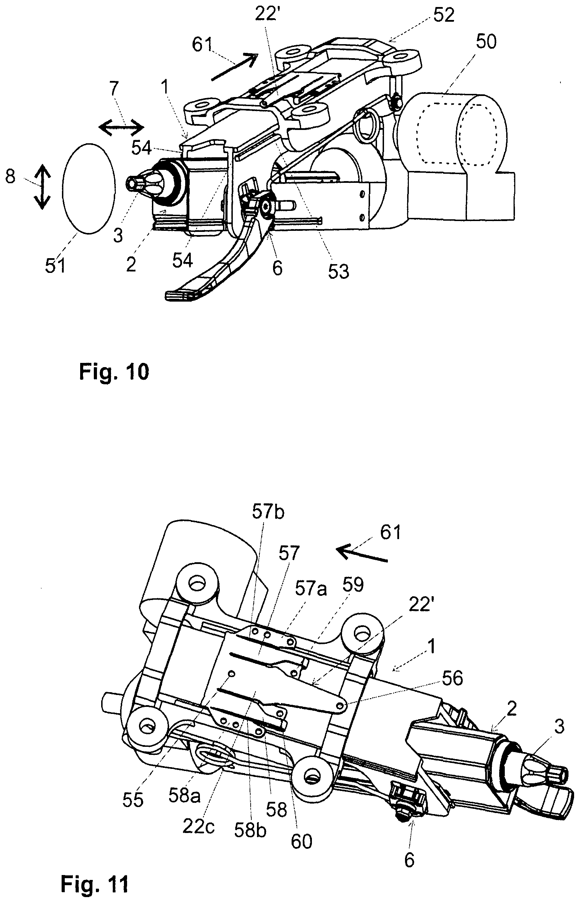

Eine zweite Ausführungsform der Erfindung geht aus den Fig. 10 und 11 hervor. Die Lenksäule ist hier beispielsweise mit einer elektrischen Hilfskraftunterstützung ausgebildet, die einen Elektromotor 50 umfasst. Eine solche Hilfskraftunterstützung könnte auch entfallen. Wiederum wird ein hier schematisch angedeutetes Lenkrad 51 tragender Lenkspindelabschnitt 3 von einer Lagereinheit 2 drehbar gelagert, die von einer Trageinheit 1 getragen ist (im Vergleich zum ersten Ausführungsbeispiel analoge Teile sind zumindest weitgehend mit den gleichen Bezugszeichen bezeichnet). Im geöffneten Zustand einer Feststellvorrichtung 6 kann die Lagereinheit 2 gegenüber der Trageinheit 1 verstellt werden, günstigerweise sowohl in die Längsrichtung 7 des Lenkspindelabschnitts 3 als auch in die der Höhen- bzw. Neigungsverstellung entsprechende Stellrichtung 8. Im geschlossenen Zustand der Feststellvorrichtung 6 ist die eingestellte Position der Lagereinheit 2 festgestellt. Diese Feststellung kann durch reibschlüssig und/oder formschlüssig zusammenwirkende Elemente erfolgen.

Die Trageinheit 1 ist nach Art eines Schlittens verschiebbar von einer Montageeinheit 52 geführt. Die Montageeinheit 52 dient hier zur Befestigung der Lenksäule am Chassis des Kraftfahrzeuges. Zur verschiebbaren Führung dienen beispielsweise Stege 53 der Montageeinheit 52, die in Führungsnuten 54 der Trageinheit 1 eingreifen. Dadurch kann die Trageinheit 1 im Crashfall in Richtung zur Fahrzeugfront gegenüber der Montageeinheit 52 verschoben werden, wobei Energie absorbiert wird.

Insoweit die Lenksäule bislang beschrieben worden ist, entspricht sie dem Stand der Technik, vgl. die in der Beschreibungseinleitung genannte DE 10 2010 024 353 A1.

Zur Absorption von Energie ist ein Energieabsorptionsteil 22' vorhanden, welches einerseits an der Trageinheit 1, andererseits an der Montageeinheit 52 befestigt ist, beispielsweise durch Verschraubungen 55, 56, welche erste und zweite Befestigungsstellen für das Energieabsorptionsteil 22' bilden. Zwischen diesen beiden Befestigungsstellen verläuft das Energieabsorptionsteil geradlinig, wobei es einen Strang 22c ausbildet. Dieser Strang 22c ist hier bandförmig ausgebildet, wobei sich die Breite über den Verlauf ändert. Das Energieabsorptionsteil 22' besteht vorzugsweise wiederum aus einem Kunststoff, insbesondere einem Thermoplast, z.B. Polyethylen.

Zusätzlich zum Energieabsorptionsteil 22' sind Zusatz-Energieabsorptionsteile 57, 58 vorhanden, die von umgebogenen Streifen gebildet werden und einerseits mit der Montageeinheit 52, andererseits mit der Trageinheit 1 verbunden sind. Die Verbindung mit der Montageeinheit 52 erfolgt durch an die Montageeinheit 52 angeschraubte Seitenlappen 57a, 58a, mit denen die Zusatz-Energieabsorptionsteile 57, 58 auf einer Seite ihrer Umbiegung über Aufreißlinien 57b, 58b verbunden sind und die beispielsweise über Verschraubungen mit der Montageeinheit 52 verschraubt sind. Auf der anderen Seite ihrer Umbiegung sind die Zusatz-Energieabsorptionsteile 57, 58 beispielsweise über eine Verschraubung 59, 60 mit der Trageinheit 1 verbunden.

Bei der Verschiebung der Trageinheit 1 im Crashfall gegenüber der Montageeinheit 52 in die zur Fahrzeugfront gerichtete Verschieberichtung 61 wird zum Einen der Strang 22c des Energieabsorptionsteils 22' gedehnt, wobei es sich um eine reine Dehnung ohne Stauchung handelt und sich seine zwischen den Befestigungsstellen gemessene Stranglänge entsprechend der verschobenen Strecke der Trageinheit 1 vergrößert. Die Verschiebung der Trageinheit 1 erfolgt also unter fortlaufender Vergrößerung der Stranglänge des Strangs 22c (und wird erst durch die Dehnbarkeit des Strangs 22c ermöglicht). Weiters ändert sich bei der Verschiebung der Trageinheit 1 die Stelle der Umbiegung der Zusatz-Energieabsorptionsteile 57, 58, sodass hierbei Biegearbeit geleistet wird. Dadurch wird zusätzlich Energie absorbiert.

Weiters kann die verschiebbare Lagerung der Trageinheit 1 durch die Montageeinheit 52 derart ausgebildet sein, dass bei der Verschiebung der Trageinheit 1 eine Reibungskraft zu überwinden ist. Dadurch kann zusätzlich Energie absorbiert werden.

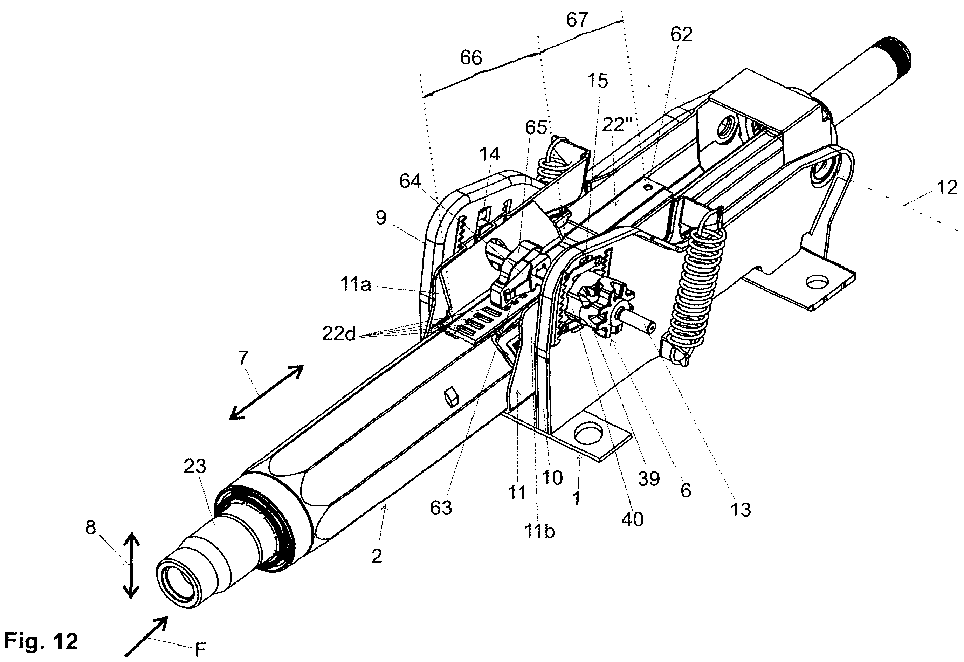

In Fig. 12 ist eine dritte Ausführungsform der Erfindung gezeigt. Bei dieser Ausführungsform ist ähnlich wie bei der ersten Ausführungsform eine chassisfest montierbare Trageinheit 1 vorhanden, die eine Lagereinheit 2 trägt, welche den an das fahrerseitige Ende anschließenden Lenkspindelabschnitt 3 drehbar lagert (im Vergleich zum ersten Ausführungsbeispiel analoge Teile sind zumindest weitgehend mit den gleichen Bezugszeichen bezeichnet). Die Lagereinheit 2 ist zwischen Seitenwangen 9, 10 der Trageinheit 1 angeordnet und zwischen der jeweiligen Seitenwange 9, 10 und der Lagereinheit 2 liegen Seitenschenkel 11a, 11b einer Zwischeneinheit 11. Im geöffneten Zustand der Feststellvorrichtung 6 ist die Zwischeneinheit 11 um die Schwenkachse 12 gegenüber der Trageinheit 1 verschwenkbar und die Lagereinheit 2 gegenüber der Zwischeneinheit 11 in Längsrichtung 7 der Lenksäule (=in Richtung der Achse des Lenkspindelabschnitts 3) verschiebbar. Im geschlossenen Zustand der Feststellvorrichtung 6 ist die eingestellte Position der Lagereinheit 2 festgestellt.

Die Feststellvorrichtung 6 umfasst einen Spannbolzen 13, der Öffnungen 14, 15, die in Form von in die Stellrichtung 8 verlaufenden Langlöchern ausgebildet sind, in den Seitenwangen 9, 10 durchsetzt, sowie Öffnungen in den Seitenschenkeln 11a, 11b der Zwischeneinheit 11 durchsetzt. Durch Drehung des Spannbolzens 13 um seine Achse, beispielsweise mit einem in Fig. 12 nicht dargestellten (aber in analoger Weise wie im ersten Ausführungsbeispiel ausgebildeten) Spannhebel, wird die Nockenscheibe 39 gegenüber der Kulissenscheibe 40 verdreht, wodurch die Seitenwangen 9, 10 zusammengedrückt werden und damit die Seitenschenkel 11a, 11b an die Lagereinheit 2 angedrückt werden. Die Lagereinheit 2 ist dadurch in die Längsrichtung 7 reibschlüssig gehalten. Weiters werden beim Schließen der Feststellvorrichtung die an den Seitenwangen 9, 10 sichtbaren Verzahnungen in Eingriff gebracht, wodurch die Verschiebung des Spannbolzens 13 in den Öffnungen 14, 15 blockiert ist und dadurch die Verschwenkung der Zwischeneinheit 11 um die Schwenkachse 12 über Vermittlung des Spannbolzens 13 blockiert ist. Die Feststellvorrichtung 6 könnte aber auch ausschließlich reibschlüssig oder ausschließlich formschlüssig ausgebildet sein oder Reib- und Formschluss kombinieren. Die Lenksäule kann auch nur in die Längsrichtung 7 verstellbar sein.

Im Falle eines Fahrzeugcrashs, wenn durch den sekundären Aufprall des Fahrers auf das Lenkrad eine Kraft F in Längsrichtung 7 des Lenkspindelabschnitts 3 auf die Lagereinheit 2 ausgeübt wird (in Richtung zur Fahrzeugfront), kann die von der Feststellvorrichtung 6 ausgeübte Haltekraft, im vorliegenden Ausführungsbeispiel die Reibkraft zwischen der Lagereinheit 2 und der Zwischeneinheit 11 überwunden werden. Die Lagereinheit 2 kann hierbei unter Energieabsorption in Längsrichtung des Lenkspindelabschnitts 3 verschoben werden. Um die in die Lenksäule eingetragene Energie gezielt abbauen zu können (über den durch die Reibungskraft zwischen der Lagereinheit 2 und der Zwischeneinheit 11 hinausgehenden Abbau der Energie) ist eine Energieabsorptionseinrichtung vorhanden.

Insoweit die Lenksäule bislang beschrieben worden ist, entspricht sie dem Stand der Technik, vgl. die in der Beschreibungseinleitung genannte WO 2011/147503 A1.

Die Energieabsorptionseinrichtung umfasst ein Energieabsorptionsteil 22", das im Bereich seines Endes, welches vom fahrerseitigen Ende des Lenkspindelabschnitts 3 abgewandt ist, mit der Lagereinheit 2 verbunden ist, beispielsweise durch eine Verschraubung 62. An dieser von der Verschraubung 62 gebildeten ersten Befestigungsstelle ist das Energieabsorptionsteil 22" somit mit einem ersten Bauteil der Lenksäule verbunden, welches von der Lagereinheit 2 gebildet wird.

In einem Endabschnitt des Energieabsorptionsteils 22", der an das andere Ende des Energieabsorptionsteils 22" anschließt, ist das Energieabsorptionsteil 22" mit einer Reihe von Ausnehmungen 22d versehen. In diese Ausnehmungen 22d kann eine Nase 63 eines Halteteils 64 eingreifen, welches auf dem Spannbolzen 13 angeordnet ist.

Das Halteteil 64 wird bei einer zum Öffnen und Schließen der Feststellvorrichtung 6 erfolgenden Drehung des Spannbolzens 13 um die Achse des Spannbolzens 13 gedreht. Hierbei ist die Nase 63 im geöffneten Zustand der Feststellvorrichtung 6 vom Energieabsorptionsteil 22" abgehoben. Beim Schließen der Feststellvorrichtung wird die Nase 63 gegen das Energieabsorptionsteil 22" verschwenkt, wobei die Nase 63 in eine der Ausnehmungen 22d einfährt oder auf einem Steg zwischen zwei benachbarten Ausnehmungen 22d zu liegen kommt. Das Halteteil 64 ist hierbei begrenzt gegenüber dem Spannbolzen 13 verschwenkbar und das Federteil 65 drückt die Nase 63 an den genannten Steg an. Wenn es im Crashfall zu einer beginnenden Verschiebung der Lagereinheit 2 kommt, so wird dadurch die Nase 63 bei Erreichen der nächsten Ausnehmung 22d in diese hineingedrückt.

Der Spannbolzen 13 ist durch die Ränder der Öffnungen 14, 15 der Trageinheit 1 und/oder durch die Ränder der Öffnungen 11a, 11b in den Seitenschenkeln der Zwischeneinheit 11, durch die hindurch er sich erstreckt, in Längsrichtung 7 des Lenkspindelabschnitts 3 unverschiebbar gehalten. Dadurch ist das auf dem Spannbolzen 13 angeordnete Halteteil 64 und somit dessen Nase 63 in die Längsrichtung 7 unverschiebbar gehalten. Der Eingriff der Nase 63 in eine der Ausnehmungen 22d des Energieabsorptionsteils 22" (wobei dieser Eingriff zumindest im Crashfall zu Beginn der Verschiebung der Lagereinheit 2 gegenüber der Trageinheit 1 hergestellt wird) bildet somit eine zweite Befestigungsstelle für das Energieabsorptionsteil 22", an der das Energieabsorptionsteil bezogen auf die Längsrichtung 7 formschlüssig von einem zweiten Bauteil der Lenksäule gehalten ist, welches hier vom Halteteil 64 gebildet wird.

Das Energieabsorptionsteil 22" umfasst einen Verbindungsabschnitt 66, in dem die Ausnehmungen 22d angeordnet sind, und einen daran anschließenden Dehnabschnitt 67, in welchem die erste Befestigungsstelle liegt. Der Verbindungsabschnitt 66 kann aus einem im Crashfall zumindest im Wesentlichen nicht oder vergleichsweise wenig (um weniger als 10% der Dehnung des Dehnabschnitts) gedehnten Material bestehen, z.B. aus einem Metall oder einem besonders festen Kunststoff. Zumindest der Dehnabschnitt 67 besteht aus einem im Crashfall dehnbaren Material, vorzugsweise aus einem Kunststoff, insbesondere einem Thermoplast, z.B. PE.

Der zwischen der ersten Befestigungsstelle und der (jeweiligen) zweiten Befestigungsstelle sich erstreckende Strang 22c des Energieabsorptionsteils 22" umfasst den von der ersten Befestigungsstelle bis zum Beginn des Verbindungsabschnitts 66 sich erstreckenden Teil des Dehnabschnitts 67 sowie den an den Dehnabschnitt 67 anschließenden und sich bis zur zweiten Befestigungsstelle sich erstreckenden Teil des Verbindungsabschnitts 66.

Im Crashfall kann die Lagereinheit 2 gegenüber dem Halteteil 64 in die Längsrichtung 7 verschoben werden, wobei eine fortschreitende Dehnung des Strangs 22c erfolgt, durch die die zwischen den Befestigungsstellen gemessene Stranglänge fortlaufend vergrößert wird. Es kann vorgesehen sein, dass die Vergrößerung der Stranglänge hierbei im Wesentlichen nur durch Dehnung des Dehnabschnitts 67 erfolgt. Durch die Vergrößerung der Stranglänge kann die Lagereinheit 2 zumindest um eine Strecke verschoben werden, die mindestens 10%, vorzugsweise mindestens 20%, besonders bevorzugt mindestens 50%, des Anfangswerts der Stranglänge beträgt.

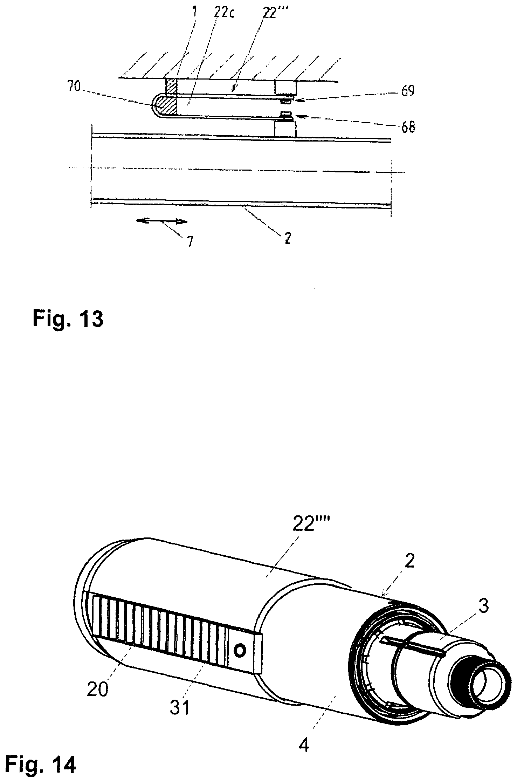

Fig. 13 zeigt eine sehr stark schematisierte Darstellung einer möglichen weiteren Ausführungsform. Die den an das fahrerseitige Ende der Lenksäule anschließenden Lenkspindelabschnitt (nicht dargestellt in Fig. 13) lagernde Lagereinheit 2 ist in Längsrichtung 7 des Lenkspindelabschnitts gegenüber einer Trageinheit 1 verschiebbar gelagert. Ein Energieabsorptionsteil 22'" ist an einer ersten Befestigungsstelle 68 mit der Lagereinheit 2 und an einer zweiten Befestigungsstelle 69 mit der Trageinheit 1 verbunden. Das Energieabsorptionsteil 22'" ist hierbei um ein mit der Trageinheit 1 verbundenes Umlenkteil 70 herumgeführt. Zwischen der ersten und der zweiten Befestigungsstelle 68, 69 verläuft ein Strang 22c des Energieabsorptionsteils 22"', der in diesem Ausführungsbeispiel somit im Wesentlichen das gesamte Energieabsorptionsteil 22'" umfasst. Die Stranglänge dieses Strangs 22c ergibt sich aus der Länge des gerade verlaufenden Abschnitts des Strangs von der ersten Befestigungsstelle 68 bis zum Umlenkteil 70 plus der Länge des gekrümmten, um das Umlenkteil 70 verlaufenden Abschnitts des Strangs 22c plus der Länge des gerade verlaufenden Abschnitts des Strangs 22c vom Umlenkteil 70 bis zur zweiten Befestigungsstelle 69.

Im Crashfall verschiebt sich die Lagereinheit 2 durch die in Längsrichtung 7 wirkende, zur Fahrzeugfront gerichtete Kraft F gegenüber der Trageinheit 1, wobei sich die Stranglänge des Strangs 22c bei der fortschreitenden Verschiebung der Lagereinheit 2 durch die Dehnung des Strangs 22c fortlaufend vergrößert. Dadurch wird eine entsprechende Energie absorbiert. Es kommt hierbei auch zu einer Änderung des Bereichs des Strangs 22c, der gekrümmt verläuft, sodass auch eine gewisse Biegearbeit geleistet wird, wodurch zusätzlich eine gewisse Energieabsorption erreicht wird. Diese ist aber kleiner als die Arbeit, die durch die die Stranglänge vergrößernde Dehnung geleistet wird (=Dehnarbeit), vorzugsweise beträgt die Biegearbeit weniger als die Hälfte, besonders bevorzugt weniger als ein Viertel, der Dehnarbeit.

Unter der fortschreitenden, die Stranglänge vergrößernden Dehnung des Strangs 22c kann die Lagereinheit 2 zumindest um eine Strecke verschoben werden, die mindestens 10%, vorzugsweise mindestens 20%, besonders bevorzugt mindestens 50%, des Anfangswerts der Stranglänge beträgt. Es kann hierbei vorgesehen sein, dass sich nach dieser Verschiebung das Energieabsorptionsteil 22'" von der zweiten Befestigungsstelle 69 löst, beispielsweise abreißt. Es wird in der Folge eine weitere Verschiebung der Lagereinheit 2 gegenüber der Trageinheit 1 ermöglicht, bei der der Strang 22c um das Umlenkteil 70 herumgezogen wird, wobei Biegearbeit geleistet wird, ohne dass es aber zu einer weiteren Vergrößerung der Stranglänge kommt.

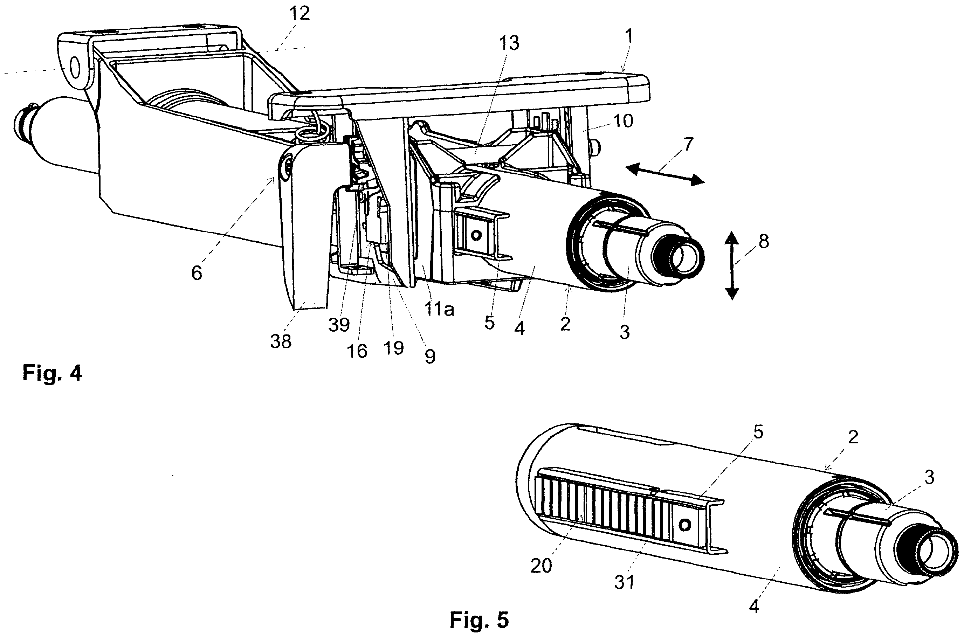

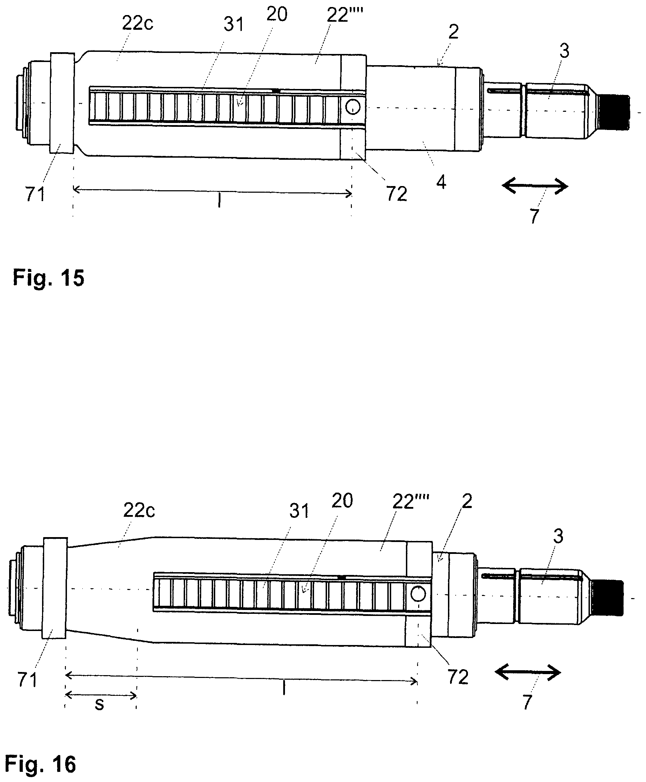

In den Fig. 14 und 15 ist eine weitere Ausführung der Erfindung stark schematisch veranschaulicht. Mit geringfügigen konstruktiven Anpassungen ist es möglich, dies Ausführungsform in die Lenksäule, wie sie in der Fig. 4 veranschaulicht ist, zu integrieren. Das Energieabsorptionsteil 22"" umschließt das Mantelrohr 4 bereichsweise in Form eines Schlauches. Mit einem ersten Befestigungsmittel 71 ist das Energieabsorptionsteil 22"" an dem Mantelrohr 4 bzw. der Lagereinheit 2 befestigt, die hier das erste Bauteil darstellt. Als erstes Befestigungsmittel 71 kann beispielsweise eine Klemm-Schelle dienen. Mit einem zweiten Befestigungsmittel 72 ist das Energieabsorptionsteil 22"" mit dem Eingriffsteil 20 verbunden, das hier das zweite Bauteil darstellt. Im Crashfall wird nach Überschreiten einer vorgegebenen Kraft F, die in Längsrichtung 7 wirkt, das Mantelrohr in Richtung der Fahrzeugfront verschoben, wobei das Energieabsorptionsteil 22"" gedehnt wird. Die Fig. 16 veranschaulicht die Situation nach einem Crash, bei dem sich die Stranglänge I des Strangs 22c des Energieabsorptionsteils 22"" durch Dehnung um die Strecke s vergrößert hat.

Auch wenn die dargestellten Ausführungsbeispiele der Erfindung sowohl in ihrer Höhe als auch in ihrer Länge verstellbare Lenksäulen betreffen, ist die Erfindung auch anwendbar auf Lenksäulen, die nur in ihrer Höhe oder nur in ihrer Länge oder überhaupt nicht verstellbare sind.

**Legende zu den Hinweisziffern:**

| | | | |
|---|---|---|---|
| 1 | Trageinheit | 24 | Stift |
| 2 | Lagereinheit | 25 | Langloch |
| 3 | Lenkspindelabschnitt | 31 | Verzahnung |
| 4 | Mantelrohr | 32 | Scherstift |
| 5 | Profil | 33 | Öffnung |
| 6 | Feststellvorrichtung | 34 | Fortsatz |
| 7 | Längsrichtung | 35 | Fortsatz |
| 8 | Stellrichtung | 36 | Anlageabschnitt |
| 9 | Seitenwange | 37 | Anlageabschnitt |
| 10 | Seitenwange | 38 | Spannhebel |
| 11 | Zwischeneinheit | 39 | Nockenscheibe |
| 11a | Seitenschenkel | 40 | Kulissenscheibe |
| 11b | Seitenschenkel | 42 | Verzahnung |
| 12 | Schwenkachse | 50 | Elektromotor |
| 13 | Spannbolzen | 51 | Lenkrad |
| 14 | Öffnung | 52 | Montageeinheit |
| 15 | Öffnung | 53 | Steg |
| 16 | Arretierteil | 54 | Führungsnut |
| 17 | Arretierteil | 55 | Verschraubung |
| 18 | Verbindungsabschnitt | 56 | Verschraubung |
| 19 | Abschnitt | 57 | Zusatz-Energieabsorptionsteil |
| 20 | Eingriffsteil | 57a | Seitenlappen |
| 22, 22', 22", 22'", 22"" | Energieabsorptionsteil | 57b | Aufreißlinie |
| | | 58 | Zusatz-Energieabsorptionsteil |
| 22a | Öffnung | 58a | Seitenlappen |
| 22b | Öffnung | 58b | Aufreißlinie |
| 22c | Strang | 59 | Verschraubung |
| 22d | Ausnehmung | 60 | Verschraubung |
| 23 | Stift | 61 | Verschieberichtung |
| 62 | Verschraubung | 68 | erste Befestigungsstelle |
| 63 | Nase | 69 | zweite Befestigungsstelle |
| 64 | Halteteil | 70 | Umlenkteil |
| 65 | Federteil | 71 | erste Befestigungsmittel |
| 66 | Verbindungsabschnitt | 72 | zweite Befestigungsmittel |
| 67 | Dehnabschnitt | | |

## Patentansprüche

1. Lenksäule für ein Kraftfahrzeug, mit einem Energieabsorptionsteil (22, 22', 22", 22"', 22"") zur Absorption von Energie im Falle eines Fahrzeugcrashs, welches hierzu an einer ersten Befestigungsstelle mit einem ersten Bauteil (2), und an einer zweiten Befestigungsstelle mit einem zweiten Bauteil (1) der Lenksäule verbunden ist und welches einen zwischen der ersten Befestigungsstelle und der zweiten Befestigungsstelle sich erstreckenden Strang (22c) aufweist, der eine entlang des Verlaufs des Strangs gemessene Stranglänge aufweist, die in einem anfänglichen Zustand vor Auftreten eines Fahrzeugcrashs einen Anfangswert besitzt, wobei das erste Bauteil gegenüber dem zweiten Bauteil unter Energieabsorption durch das Energieabsorptionsteil (22, 22', 22", 22"', 22"") über einen Verschiebeweg verschiebbar ist, und das erste Bauteil gegenüber dem zweiten Bauteil unter einer fortschreitenden, die Stranglänge vergrößernden Dehnung des Strangs (22c) des Energieabsorptionsteils (22, 22', 22", 22"', 22"") um eine Strecke verschiebbar ist, die mindestens 10% des Anfangswerts der Stranglänge beträgt, wobei sich das Energieabsorptionsteil (22, 22', 22", 22"', 22"") in eine Verschieberichtung erstreckt, entlang der sich das erste Bauteil (2), welches durch ein Mantelrohr (4) oder eine Lagereinheit (2) gebildet wird, gegenüber dem zweiten Bauteil, welches durch eine Trageinheit (1) gebildet wird, im Crashfall verschiebt,
**dadurch gekennzeichnet, dass** die vom Strang (22c) durch seine Verformung absorbierte Energie zu mehr als 90% aus der die Stranglänge vergrößernden Dehnung des Strangs (22c) resultiert, wobei es sich im Wesentlichen um eine reine Dehnung des Strangs handelt und die durch Biegungen absorbierte Energie weniger als 10% der durch die die Stranglänge vergrößernde Dehnung absorbierten Energie ist.

2. Lenksäule nach Anspruch 1, **dadurch gekennzeichnet, dass** das erste Bauteil ausgehend von einer Ausgangsposition, die das erste Bauteil unmittelbar vor dem Fahrzeugcrash einnimmt, gegenüber dem zweiten Bauteil unter einer fortschreitenden, die Stranglänge vergrößernden Dehnung des Strangs (22c) des Energieabsorptionsteils (22, 22', 22", 22"', 22"") um eine Strecke verschiebbar ist, die mindestens 20% des Anfangswerts der Stranglänge beträgt.

3. Lenksäule nach Anspruch 1 oder 2, **dadurch gekennzeichnet, dass** das erste Bauteil ausgehend von seiner Ausgangsposition gegenüber dem zweiten Bauteil über eine Strecke von mindestens 2cm zumindest im Wesentlichen nur durch die die Stranglänge vergrößernde Dehnung des Strangs (22c) des Energieabsorptionsteils (22, 22', 22", 22"', 22"") verschiebbar ist.

4. Lenksäule nach einem der Ansprüche 1 bis 3, **dadurch gekennzeichnet, dass** die Lenksäule eine einen an das fahrerseitige Ende der Lenksäule anschließenden Lenkspindelabschnitt (3) drehbare lagernde Lagereinheit (2) und eine die Lagereinheit (2) tragende Trageinheit (1) umfasst.

5. Lenksäule nach Anspruch 4, **dadurch gekennzeichnet, dass** das Energieabsorptionsteil (22, 22', 22", 22'") als Band oder Draht oder Stab ausgebildet ist, das bzw. der sich in einer Verschieberichtung (7, 61) des ersten Bauteils gegenüber dem zweiten Bauteil erstreckt und außerhalb der Lagereinheit (2) angeordnet ist.

6. Lenksäule nach Anspruch 4 oder 5, **dadurch gekennzeichnet, dass** das Energieabsorptionsteil (22"") als rohr- oder schlauchförmiges Teil ausgebildet ist, das sich in einer Verschieberichtung (7) des ersten Bauteils gegenüber dem zweiten Bauteil erstreckt und die Lagereinheit (2) zumindest über einen Teil ihrer Länge umschließt.

7. Lenksäule nach einem der Ansprüche 4 bis 6, **dadurch gekennzeichnet, dass** die Lagereinheit (2) in einem geöffneten Zustand einer Feststellvorrichtung (6) zur Veränderung der Position des fahrerseitigen Endes der Lenkspindel gegenüber der Trageinheit (1) verstellbar ist und die eingestellte Position in einem geschlossenen Zustand der Feststellvorrichtung festgestellt ist.

8. Lenksäule nach Anspruch 7, **dadurch gekennzeichnet, dass** die Lagereinheit (2) gegenüber der Trageinheit (1) im geöffneten Zustand der Feststellvorrichtung zumindest in eine parallel zum an das fahrerseitige Ende der Lenksäule anschließenden Lenkspindelabschnitt (3) liegende Längsrichtung (7) verstellbar ist.

9. Lenksäule nach Anspruch 8, **dadurch gekennzeichnet, dass** die Lagereinheit (2) das erste Bauteil darstellt und das zweite Bauteil im geschlossenen Zustand der Feststellvorrichtung (6) mit der Trageinheit (1) bezogen auf die Längsrichtung (7) des Lenkspindelabschnitts (3) formschlüssig verbunden ist und im geöffneten Zustand der Feststellvorrichtung (6) gegenüber der Trageinheit (1) in die Längsrichtung (7) des Lenkspindelabschnitts (3) verschiebbar ist.

10. Lenksäule nach Anspruch 8, **dadurch gekennzeichnet, dass** die Lagereinheit (2) das erste Bauteil darstellt und das Energieabsorptionsteil (22") im geschlossenen Zustand der Feststellvorrichtung (6) mit der Trageinheit (1) bezogen auf die Längsrichtung (7) des Lenkspindelabschnitts (3) formschlüssig verbunden ist, zumindest nach einer anfänglichen Verschiebung der Lagereinheit (2) gegenüber der Trageinheit (1) im Falle eines Fahrzeugcrashs, und im geöffneten Zustand der Feststellvorrichtung (6) gegenüber der Trageinheit (1) in die Längsrichtung (7) des Lenkspindelabschnitts (3) verschiebbar ist.

11. Lenksäule nach einem der Ansprüche 4 bis 8, **dadurch gekennzeichnet, dass** die Trageinheit (1) das erste Bauteil darstellt und eine am Fahrzeugchassis befestigbare Montageeinheit (52), von der die Trageinheit (1) verschiebbar gelagert ist, das zweite Bauteil darstellt.

12. Lenksäule nach einem der Ansprüche 1 bis 11, **dadurch gekennzeichnet, dass** der Strang (22c) oder zumindest ein Abschnitt des Strangs (22c) zumindest zum Großteil aus einem Kunststoff besteht.

13. Lenksäule nach Anspruch 11 oder 12, **dadurch gekennzeichnet, dass** das Energieabsorptionsteil (22, 22', 22", 22"', 22"") insgesamt zumindest zum Großteil aus Kunststoff besteht

14. Lenksäule nach einem der Ansprüche 1 bis 13, **dadurch gekennzeichnet, dass** ein unterer Schwellenwert für die auf das Energieabsorptionsteil (22, 22', 22", 22"', 22"") einwirkende Zugkraft, durch die eine die Stranglänge vergrößernde Dehnung um mindestens 10% des Anfangswerts der Stranglänge erfolgt, bei mehr als 1.000 N liegt.

15. Lenksäule nach einem der Ansprüche 1 bis 14, **dadurch gekennzeichnet, dass** ein unterer Schwellenwert für die auf das Energieabsorptionsteil (22, 22', 22", 22"', 22"") einwirkende Zugkraft, durch die eine die Stranglänge vergrößernde Dehnung um mindestens 10% des Anfangswerts der Stranglänge erfolgt, bei weniger als 100.000 N liegt.

## Claims

1. Steering column for a motor vehicle, having an energy absorption part (22, 22', 22'', 22"', 22'''') for the absorption of energy in the event of a vehicle crash, which energy absorption part is, for this purpose, connected at a first fastening point to a first component (2), and at a second fastening point to a second component (1), of the steering column, and which energy absorption part comprises a strand (22c) which extends between the first fastening point and the second fastening point and which comprises a strand length measured along the profile of the strand, which strand length comprises an initial value in an initial state before the occurrence of a vehicle crash, wherein the first component is displaceable over a displacement travel relative to the second component, with energy being absorbed by the energy absorption part (22, 22', 22", 22"',22""), and the first component is displaceable relative to the second component, with progressive strand-length-increasing elongation of the strand (22c) of the energy absorption part (22, 22', 22'', 22"', 22""), by a distance that amounts to at least 10% of the initial value of the strand length, wherein the energy absorption part (22, 22', 22", 22"', 22'''') extends in a displacement direction along which the first component (2), which is formed by a casing tube (4) or a bearing unit (2), is displaced relative to the second component, which is formed by a support unit (1), in the event of a crash,
**characterized in that** more than 90% of the energy absorbed by the strand (22c) as a result of its deformation results from the elongation of the strand (22c) which increases the strand length, wherein substantially pure elongation of the strand is involved, and the energy absorbed as a result of bending is less than 10% of the energy absorbed by the elongation which increases the strand length.

2. Steering column according to Claim 1, **characterized in that**, proceeding from an initial position that the first component assumes immediately before the vehicle crash, the first component is displaceable relative to the second component, with progressive strand-length-increasing elongation of the strand (22c) of the energy absorption part (22, 22', 22", 22"', 22""), by a distance that amounts to at least 20% of the initial value of the strand length.

3. Steering column according to Claim 1 or 2, **characterized in that** the first component, proceeding from its initial position, is displaceable relative to the second component over a distance of at least 2 cm at least substantially only as a result of the strand-length-increasing elongation of the strand (22c) of the energy absorption part (22, 22', 22", 22"', 22"").

4. Steering column according to one of Claims 1 to 3, **characterized in that** the steering column comprises a bearing unit (2), which serves for the rotatable mounting of a steering spindle section (3) adjoining the driver-side end of the steering column, and a support unit (1), which supports the bearing unit (2).

5. Steering column according to Claim 4, **characterized in that** the energy absorption part (22, 22', 22'', 22"') is formed as a band or wire or bar which extends in a displacement direction (7, 61) of the first component relative to the second component and is arranged outside the bearing unit (2).

6. Steering column according to Claim 4 or 5, **characterized in that** the energy absorption part (22"") is formed as a tubular or hose-like part which extends in a displacement direction (7) of the first component relative to the second component and which surrounds the bearing unit (2) at least over a part of its length.

7. Steering column according to one of Claims 4 to 6, **characterized in that** the bearing unit (2) is adjustable relative to the support unit (1) when a fixing device (6) is in an open state for the alteration of the position of the driver-side end of the steering spindle, and the set position is fixed when the fixing device is in a closed state.

8. Steering column according to Claim 7, **characterized in that** the bearing unit (2) is adjustable relative to the support unit (1), when the fixing device is in the open state, at least in a longitudinal direction (7) that is parallel to the steering spindle section (3) adjoining the driver-side end of the steering column.

9. Steering column according to Claim 8, **characterized in that** the bearing unit (2) constitutes the first component, and, when the fixing device (6) is in the closed state, the second component is connected to the support unit (1) in positively locking fashion with respect to the longitudinal direction (7) of the steering spindle section (3) and, when the fixing device (6) is in the open state, the second component is displaceable relative to the support unit (1) in the longitudinal direction (7) of the steering spindle section (3).

10. Steering column according to Claim 8, **characterized in that** the bearing unit (2) constitutes the first component and, when the fixing device (6) is in the closed state, the energy absorption part (22") is connected to the support unit (1) in positively locking fashion with respect to the longitudinal direction (7) of the steering spindle section (3), at least after an initial displacement of the bearing unit (2) relative to the support unit (1) in the event of a vehicle crash, and, when the fixing device (6) is in the open state, the energy absorption part (22") is displaceable relative to the support unit (1) in the longitudinal direction (7) of the steering spindle section (3).

11. Steering column according to one of Claims 4 to 8, **characterized in that** the support unit (1) constitutes the first component, and an installation unit (52), which is fastenable to the vehicle chassis and by which the support unit (1) is displaceably mounted, constitutes the second component.

12. Steering column according to one of Claims 1 to 11, **characterized in that** the strand (22c) or at least one section of the strand (22c) is at least predominantly composed of a plastic.

13. Steering column according to Claim 11 or 12, **characterized in that** the energy absorption part (22, 22', 22'', 22"', 22'''') is altogether at least predominantly composed of plastic.

14. Steering column according to one of Claims 1 to 13, **characterized in that** a lower threshold value for the tensile force, acting on the energy absorption part (22, 22', 22", 22"', 22""), which causes the strand-length-increasing elongation by at least 10% of the initial value of the strand length is greater than 1000 N.

15. Steering column according to one of Claims 1 to 14, **characterized in that** a lower threshold value for the tensile force, acting on the energy absorption part (22, 22', 22", 22"', 22""), which causes the strand-length-increasing elongation by at least 10% of the initial value of the strand length is less than 100 000 N.

## Revendications

1. Colonne de direction pour un véhicule automobile, comprenant une partie d'absorption d'énergie (22, 22', 22", 22"',22'''') pour l'absorption d'énergie dans le cas d'une collision du véhicule, laquelle est connectée à cet effet au niveau d'une première zone de fixation à un premier composant (2) et au niveau d'une deuxième zone de fixation à un deuxième composant (1) de la colonne de direction et présente un tronçon (22c) s'étendant entre la première zone de fixation et la deuxième zone de fixation, lequel présente une longueur de tronçon, mesurée le long de l'étendue du tronçon, qui possède une valeur initiale, dans un état initial avant l'apparition d'une collision du véhicule, le premier composant pouvant être déplacé par rapport au deuxième composant par absorption d'énergie par la partie d'absorption d'énergie (22, 22', 22'', 22"', 22"") sur une course de déplacement, et le premier composant pouvant être déplacé par rapport au deuxième composant en étirant en continu le tronçon (22c) de la partie d'absorption d'énergie (22, 22', 22", 22"', 22'''') de manière à augmenter la longueur du tronçon, d'une distance qui correspond au moins à 10 % de la valeur initiale de la longueur du tronçon, la partie d'absorption d'énergie (22, 22', 22", 22"', 22'''') s'étendant dans une direction de déplacement le long de laquelle le premier composant (2), qui est formé par un tube d'enveloppe (4) ou par une unité de palier (2), se déplace en cas de collision par rapport au deuxième composant, qui est formé par une unité de support (1),
**caractérisée en ce que** l'énergie absorbée par le tronçon (22c) par sa déformation résulte, pour plus de 90 %, de l'extension du tronçon (22c) augmentant la longueur du tronçon, ceci étant essentiellement une extension simple du tronçon, et l'énergie absorbée par les flexions représentant moins de 10 % de l'énergie absorbée par l'extension augmentant la longueur du tronçon.

2. Colonne de direction selon la revendication 1, **caractérisée en ce que** le premier composant peut être déplacé d'une position initiale adoptée par le premier composant immédiatement avant la collision du véhicule, par rapport au deuxième composant par extension continue du tronçon (22c) de la partie d'absorption d'énergie (22, 22', 22", 22"', 22""), augmentant la longueur du tronçon, sur une distance qui correspond au moins à 20 % de la valeur initiale de la longueur du tronçon.

3. Colonne de direction selon la revendication 1 ou 2, **caractérisée en ce que** le premier composant peut être déplacé à partir de sa position initiale par rapport au deuxième composant sur une distance d'au moins 2 cm au moins essentiellement uniquement par l'extension du tronçon (22c) de la partie d'absorption d'énergie (22, 22', 22", 22"', 22"") augmentant la longueur du tronçon.

4. Colonne de direction selon l'une quelconque des revendications 1 à 3, **caractérisée en ce que** la colonne de direction comprend une unité de palier (2) supportant à rotation une portion d'arbre de direction (3) se raccordant à l'extrémité de la colonne de direction du côté du conducteur et une unité de support (1) portant l'unité de palier (2).

5. Colonne de direction selon la revendication 4, **caractérisée en ce que** la partie d'absorption d'énergie (22, 22', 22'', 22"') est réalisée sous forme de bande ou de fil de barre qui s'étend dans une direction de déplacement (7, 61) du premier composant par rapport au deuxième composant et qui est disposé(e) à l'extérieur de l'unité de palier (2).

6. Colonne de direction selon la revendication 4 ou 5, **caractérisée en ce que** la partie d'absorption d'énergie (22'''') est réalisée sous forme de partie en forme de tube ou de tuyau qui s'étend dans une direction de déplacement (7) du premier composant par rapport au deuxième composant et entoure au moins l'unité de palier (2) sur une partie de sa longueur.

7. Colonne de direction selon l'une quelconque des revendications 4 à 6, **caractérisée en ce que** l'unité de palier (2), dans un état ouvert d'un dispositif de fixation (6) pour modifier la position de l'extrémité de l'arbre de direction du côté du conducteur, peut être déplacée par rapport à l'unité de support (1) et la position ajustée est fixée dans un état fermé du dispositif de fixation.

8. Colonne de direction selon la revendication 7, **caractérisée en ce que** l'unité de palier (2) peut être déplacée par rapport à l'unité de support (1) dans l'état ouvert du dispositif de fixation au moins dans une direction longitudinale (7) située parallèlement à la portion d'arbre de direction (3) se raccordant à l'extrémité de l'arbre de direction du côté du conducteur.

9. Colonne de direction selon la revendication 8, **caractérisée en ce que** l'unité de palier (2) constitue le premier composant et le deuxième composant, dans l'état fermé du dispositif de fixation (6), est connecté par engagement par correspondance de formes à l'unité de support (1) par rapport à la direction longitudinale (7) de la portion d'arbre de direction (3), et dans l'état ouvert du dispositif de fixation (6), peut être déplacé par rapport à l'unité de support (1) dans la direction longitudinale (7) de la portion d'arbre de direction (3).

10. Colonne de direction selon la revendication 8, **caractérisée en ce que** l'unité de palier (2) constitue le premier composant et la partie d'absorption d'énergie (22"), dans l'état fermé du dispositif de fixation (6), est connectée par engagement par correspondance de formes à l'unité de support (1) par rapport à la direction longitudinale (7) de la portion d'arbre de direction (3), et au moins après un déplacement initial de l'unité de palier (2) par rapport à l'unité de support (1) dans le cas d'une collision de véhicule, et dans l'état ouvert du dispositif de fixation (6), peut être déplacée par rapport à l'unité de support (1) dans la direction longitudinale (7) de la portion d'arbre de direction (3).

11. Colonne de direction selon l'une quelconque des revendications 4 à 8, **caractérisée en ce que** l'unité de support (1) constitue le premier composant et une unité de montage (52) pouvant être fixée sur le châssis du véhicule, par laquelle l'unité de support (1) est supportée de manière déplaçable, constitue le deuxième composant.

12. Colonne de direction selon l'une quelconque des revendications 1 à 11, **caractérisée en ce que** le tronçon (22c) ou au moins une partie du tronçon (22c) se compose au moins pour la majeure partie de plastique.

13. Colonne de direction selon la revendication 11 ou 12, **caractérisée en ce que** la partie d'absorption d'énergie (22, 22', 22", 22"', 22'''') se compose dans l'ensemble au moins pour la majeure partie de plastique.

14. Colonne de direction selon l'une quelconque des revendications 1 à 13, **caractérisée en ce qu'**une valeur seuil inférieure pour la force de traction agissant sur la partie d'absorption d'énergie (22, 22', 22", 22"', 22""), par laquelle se produit une extension augmentant la longueur du tronçon, d'au moins 10 % de la valeur initiale de la longueur du tronçon, est supérieure à 1000 N.

15. Colonne de direction selon l'une quelconque des revendications 1 à 14, **caractérisée en ce qu'**une valeur seuil inférieure pour la force de traction agissant sur la partie d'absorption d'énergie (22, 22', 22", 22"', 22""), par laquelle se produit une extension augmentant la longueur du tronçon, d'au moins 10 % de la valeur initiale de la longueur du tronçon, est inférieure à 100 000 N.
